(19)

Europäisches
Patentamt
European
Patent Office
Office européen
des brevets

(11) **EP 4 227 029 A1**

(12) **EUROPEAN PATENT APPLICATION**
published in accordance with Art. 153(4) EPC

(43) Date of publication:
**16.08.2023 Bulletin 2023/33**

(21) Application number: **21880058.9**

(22) Date of filing: **11.10.2021**

(51) International Patent Classification (IPC):
**B22F 10/28** $^{(2021.01)}$    **B22F 1/00** $^{(2022.01)}$
**B22F 3/16** $^{(2006.01)}$    **B22F 3/24** $^{(2006.01)}$
**B22F 10/362** $^{(2021.01)}$    **B22F 10/64** $^{(2021.01)}$
**B22F 12/13** $^{(2021.01)}$    **C22C 21/00** $^{(2006.01)}$

(52) Cooperative Patent Classification (CPC):
**B22F 1/00; B22F 3/16; B22F 3/24; B22F 10/28;**
**B22F 10/362; B22F 10/64; B22F 12/13;**
**C22C 21/00;** Y02P 10/25

(86) International application number:
**PCT/JP2021/037590**

(87) International publication number:
**WO 2022/080319 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.10.2020 JP 2020171885**

(71) Applicants:
• **Osaka Research Institute of Industrial Science
and Technology**
**Izumi-shi, Osaka 594-1157 (JP)**
• **Toyo Aluminium Kabushiki Kaisha**
**Osaka-shi, Osaka 541-0056 (JP)**

(72) Inventors:
• **SUGAHARA, Takahiro**
**Izumi-shi, Osaka 594-1157 (JP)**

• **NAKAMOTO, Takayuki**
**Izumi-shi, Osaka 594-1157 (JP)**
• **MIKI, Takao**
**Izumi-shi, Osaka 594-1157 (JP)**
• **FUJIWARA, Kota**
**Izumi-shi, Osaka 594-1157 (JP)**
• **OZAKI, Tomoatsu**
**Izumi-shi, Osaka 594-1157 (JP)**
• **MURAKAMI, Isao**
**Osaka-shi, Osaka 541-0056 (JP)**
• **TANAKA, Akiei**
**Osaka-shi, Osaka 541-0056 (JP)**

(74) Representative: **Grünecker Patent- und
Rechtsanwälte
PartG mbB
Leopoldstraße 4
80802 München (DE)**

(54) **METAL POWDER FOR ADDITIVE MANUFACTURING, METHOD FOR MANUFACTURING
ADDITIVE-MANUFACTURED ARTICLE USING SAME, AND ADDITIVE-MANUFACTURED
ARTICLE**

(57) A metal powder for additive manufacturing is used (i) which comprises, as a main component, aluminum, and not less than 0.20% by mass and not more than 13% by mass of at least one alloy element other than the aluminum, selected from iron, manganese, chromium, nickel and zirconium, and (ii) in which the content of iron is less than 4.5% by mass.

EP 4 227 029 A1

## FIG. 3

**Description**

TECHNICAL FIELD

The present invention relates to an aluminum alloy powder for manufacturing an additive manufactured object composed of an aluminum alloy, which has high relative density as well as excellent high-temperature strength and high-temperature Young's modulus; a method of manufacturing an additive manufactured object using this powder; and the additive manufactured object.

BACKGROUND ART

As a conventional aluminum alloy material for additive manufacturing, an Al-Si-based alloy for casting such as Al-10% Si-0.4% Mg (ISO-AlSi10Mg) alloy is mainly used. An additive manufactured object manufactured using such an alloy has an extremely fine (on the order of submicrons) cellular dendrite microstructure due to the effect of rapid cooling solidification by irradiation with, e.g., a laser, and has excellent mechanical properties (strength and elongation at break) at normal temperature.

As an example of using, in additive manufacturing, such an Al-Si-based alloy for casting, the below-identified Patent Document 1 discloses a metal powder for additive manufacturing that contains, to aluminum as its main component, silicon and magnesium such that the total content of the silicon and magnesium is not more than 10% by mass, and the content of the silicon is more than 1% by mass. By conducting additive manufacturing using this powder, it is possible to obtain an additive manufactured object of an Al-Si-based alloy having high relative density, ductility and thermal conductivity, and as well as excellent mechanical properties at normal temperature.

The below-identified Patent Document 2 discloses a metal object composed of an alloy which contains a main metallic element and an additional element, and in which the rate of the atomic radius b of the main metallic element to the atomic radius a of the additional element, 100 (a-b)/b, is -30% to + 30%, and describes that the metal object obtained has excellent functional properties such as mechanical properties.

In the below-identified non-Patent Document 1, e.g., the mechanical properties of an additive manufactured object manufactured using an aluminum alloy powder containing silicon and magnesium is studied.

PRIOR ART DOCUMENT(S)

PATENT DOCUMENT(S)

Patent Document 1: PCT International Publication No. WO2017/203717
Patent Document 2: Japanese Unexamined Patent Application Publication No. 2016-053198

NON-PATENT DOCUMENT(S)

Non-Patent Document 1: Journal of Japan Laser Processing Society; Takahiro Kimura, Vol.25, No.3 (2018), 164-173

SUMMARY OF THE INVENTION

PROBLEMS TO BE SOLVED BY THE INVENTION

However, it is disclosed, for example, in non-Patent Document 1 that while an additive manufactured object composed of an Al-Si-based alloy as obtained in Patent Document 1 has excellent mechanical properties at normal temperature, when exposed to a high temperature of 150°C or higher, the strength decreases quickly due to the influence of coarsening and granulation of the microstructure by overaging. Therefore, it is difficult to use an additive manufactured object manufactured using the Al-Si-based alloy powder of Patent Document 1 for parts that require heat resistance.

In Patent Document 2, while alloy elements are selected for the purpose of strengthening the alloy by being mixed in the aluminum matrix phase to form a solid solution, if the alloy contains an element whose diffusion rate is fast, it is expected that coarse precipitates are formed in a high-temperature range, and the strength decreases markedly. Therefore, such an alloy is not suitable for use in a high-temperature environment.

It is an object of the present invention to provide an aluminum alloy powder for manufacturing an additive manufactured object composed of an aluminum alloy, which has excellent high-temperature strength and high-temperature Young's modulus; an additive manufactured object manufactured using this powder; and a manufacturing method thereof.

MEANS FOR SOLVING THE PROBLEMS

In order to solve these problems, the inventors focused on transition metals as additive alloy elements to aluminum to improve heat resistance. In general, the maximum solid solution limit of transition metals mixed with aluminum is low, and the transition metals form stable intermetallic compounds and a solid solution until high temperature. Also, since the diffusion rates of transition metal elements in aluminum are relatively slow, the aluminum-transition metal-based alloy can stably keep its microstructure for a long period of time in a high-temperature range. Therefore, the aluminum-transition metal-based alloy is expected to improve high-temperature strength and high-temperature Young's modulus.

The above object of the present invention is achieved by a metal powder with an aluminum alloy for additive manufacturing containing, to aluminum, not less than 0.20% by mass and not more than 13% by mass of at least one alloy element selected from iron, manganese, chromium, nickel and zirconium, wherein the iron content in the metal powder is less than 4.5% by mass.

In the metal powder of the present invention, the total content of the iron, the manganese, the chromium, the nickel and the zirconium is preferably not less than 0.20% by mass and not more than 13% by mass.

It is more preferable that the metal powder of the present invention further contains less than 1% by mass of silicon.

The above object of the present invention is also achieved by a manufacturing method of manufacturing an additive manufactured object, the manufacturing method comprising: a first step of forming a powder layer containing the above metal powder; and a second step of solidifying the metal powder at predetermined portions of the powder layer, thereby forming a metal layer, wherein by alternately repeating the first step and the second step, a plurality of the metal layers is stacked and joined together, thereby manufacturing the additive manufactured object.

In the first step and the second step of the manufacturing method according to the present invention, the metal layers, the powder layer and the additive manufactured object are preferably preheated at a temperature of not less than 50°C and not more than 500°C.

It is preferable that the manufacturing method of the present invention further comprises a third step of heat-treating the additive manufactured object after the second step.

In the third step of the manufacturing method according to the present invention, the additive manufactured object is more preferably heat-treated at a temperature of not less than 200°C and not more than 650°C.

The above object of the present invention is also achieved by an additive manufactured object containing, to aluminum, not less than 0.20% by mass and not more than 13% by mass of at least one alloy element selected from iron, manganese, chromium, nickel and zirconium, wherein the iron content in the additive manufactured object is less than 4.5% by mass, and wherein the additive manufactured object has a relative density of not less than 95% and not more than 100%.

In the additive manufactured object of the present invention, the total content of the iron, the manganese, the chromium, the nickel and the zirconium is preferably not less than 0.20% by mass and not more than 13% by mass.

It is more preferable that the additive manufactured object of the present invention further contains less than 1% by mass of silicon.

EFFECTS OF THE INVENTION

By using the metal powder for additive manufacturing according to the present invention, it is possible to manufacture an additive manufactured object that is high in relative density, improved in high-temperature strength and high-temperature Young's modulus, and excellent in heat resistance.

BRIEF DESCRIPTION OF THE DRAWINGS

Fig. 1A is a step view illustrating a step of a manufacturing method of an additive manufactured object embodying the present invention.

Fig. 1B is a step view illustrating a step of the manufacturing method of the additive manufactured object embodying the present invention, the step following the step of Fig. 1A.

Fig. 1C is a step view illustrating a step of the manufacturing method of the additive manufactured object embodying the present invention, the step following the step of Fig. 1B.

Fig. 2Ais a step view illustrating a step of the manufacturing method of the additive manufactured object, the step following the step of Fig. 1C.

Fig. 2B is a step view illustrating a step of the manufacturing method of the additive manufactured object, the step following the step of Fig. 2A.

Fig. 2C is a step view illustrating a step of the manufacturing method of the additive manufactured object, the step following the step of Fig. 2B.

Fig. 3 is a step view illustrating a step of the manufacturing method of the additive manufactured object, the step following the step of Fig. 2C.

Fig. 4 is a plan view of a test piece used in a tensile test.

Fig. 5A is a photograph illustrating the shape of an additive manufactured object obtained.

Fig. 5B is a photograph illustrating the shape of a columnar additive manufactured object for forming a tensile test piece therefrom.

Fig. 6A is an optical microscope image on a vertical cross section of an additive manufactured object obtained (Example 1-1).

Fig. 6B is an optical microscope image on a vertical cross section of an additive manufactured object obtained (Example 2-1).

Fig. 6C is an optical microscope image on a vertical cross section of an additive manufactured object obtained (Example 3-1).

Fig. 6D is an optical microscope image on a vertical cross section of an additive manufactured object obtained (Example 4-1).

Fig. 7A is an optical microscope image on a vertical cross section of an additive manufactured object obtained (Example 5-1).

Fig. 7B is an optical microscope image on a vertical cross section of an additive manufactured object obtained (Example 6-1).

Fig. 7C is an optical microscope image on a vertical cross section of an additive manufactured object obtained (Example 7-1).

Fig. 7D is an optical microscope image on a vertical cross section of an additive manufactured object obtained (Example 8-1).

Fig. 8A is an optical microscope image on a vertical cross section of an additive manufactured object obtained (Example 9-2).

Fig. 8B is an optical microscope image on a vertical cross section of an additive manufactured object obtained (Example 10-2).

Fig. 8C is an optical microscope image on a vertical cross section of an additive manufactured object obtained (Example 11-2).

Fig. 8D is an optical microscope image on a vertical cross section of an additive manufactured object obtained (Example 12-2).

Fig. 9A is an optical microscope image on a vertical cross section of an additive manufactured object obtained (Comparative Example 1-1).

Fig. 9B is an optical microscope image on a vertical cross section of an additive manufactured object obtained (Comparative Example 2-1).

Fig. 9C is an optical microscope image on a vertical cross section of an additive manufactured object obtained (Comparative Example 3-1).

Fig. 10A is an optical microscope image on a vertical cross section of an additive manufactured object obtained (Comparative Example 4-1).

Fig. 10B is an optical microscope image on a vertical cross section of an additive manufactured object obtained (Comparative Example 5-1).

Fig. 11A comprises outer appearance photographs of additive manufactured objects manufactured at preheating temperatures of 35°C and 200°C, respectively, and optical microscope images on vertical cross sections of the respective additive manufactured objects (Reference Example 9-1, Example 9-2).

Fig. 11B comprises outer appearance photographs of additive manufactured objects manufactured at preheating temperatures of 35°C and 200°C, respectively, and optical microscope images on vertical cross sections of the respective additive manufactured objects (Reference Example 10-1, Example 10-2).

Fig. 11C comprises outer appearance photographs of additive manufactured objects manufactured at preheating temperatures of 35°C and 200°C, respectively, and optical microscope images on vertical cross sections of the respective additive manufactured objects (Reference Example 11-1, Example 11-2).

Fig. 11D comprises outer appearance photographs of additive manufactured objects manufactured at preheating temperatures of 35°C and 200°C, respectively, and optical microscope images on vertical cross sections of the respective additive manufactured objects (Reference Example 12-1, Example 12-2).

Fig. 12A is a graph showing a change in the Vickers hardness of an additive manufactured object by heat treatment (Example 1-1).

Fig. 12B is a graph showing a change in the Vickers hardness of an additive manufactured object due to heat treatment (Example 2-1).

Fig. 12C is a graph showing a change in the Vickers hardness of an additive manufactured object due to heat treatment (Example 3-1).

Fig. 12D is a graph showing a change in the Vickers hardness of an additive manufactured object due to heat treatment (Example 4-1).

Fig. 13A is a graph showing a change in the Vickers hardness of an additive manufactured object due to heat treatment (Example 5-1).

Fig. 13B is a graph showing a change in the Vickers hardness of an additive manufactured object due to heat treatment (Example 6-1).

Fig. 13C is a graph showing a change in the Vickers hardness of an additive manufactured object due to heat treatment (Example 7-1).

Fig. 13D is a graph showing a change in the Vickers hardness of an additive manufactured object due to heat treatment (Example 8-1).

Fig. 14A is a graph showing a change in the Vickers hardness of an additive manufactured object due to heat treatment (Example 9-2).

Fig. 14B is a graph showing a change in the Vickers hardness of an additive manufactured object due to heat treatment (Example 10-2).

Fig. 14C is a graph showing a change in the Vickers hardness of an additive manufactured object due to heat treatment (Example 11-2).

Fig. 14D is a graph showing a change in the Vickers hardness of an additive manufactured object due to heat treatment (Example 12-2).

Fig. 15A is a scanning transmission electron microscope (STEM) bright-field image on a horizontal cross section of an additive manufactured object obtained (Example 1-1).

Fig. 15B is a scanning transmission electron microscope (STEM) bright-field image on a horizontal cross section of an additive manufactured object obtained (Example 2-1).

Fig. 15C is a scanning transmission electron microscope (STEM) bright-field image on a horizontal cross section of an additive manufactured object obtained (Example 5-1).

Fig. 15D is a scanning transmission electron microscope (STEM) high-angle annular dark-field image on a horizontal cross section of an additive manufactured object obtained (Example 7-1).

Fig. 15E is a scanning transmission electron microscope (STEM) high-angle annular dark-field image on a horizontal cross section of an additive manufactured object obtained (Example 8-1).

Fig. 15F is a scanning transmission electron microscope (STEM) high-angle annular dark-field image on a horizontal cross section of an additive manufactured object obtained (Example 11-2).

Fig. 15G is a scanning transmission electron microscope (STEM) bright-field image on a horizontal cross section of an additive manufactured object obtained (Example 12-2).

## BEST MODE FOR CARRYING OUT THE INVENTION

An embodiment of the present invention is described below. The present invention is directed to an aluminum alloy powder for manufacturing an additive manufactured object (hereinafter referred to as the "metal powder for additive manufacturing"); an additive manufactured object manufactured using this powder; and a manufacturing method thereof. The description given below does not limit the scope of the present invention.

<Metal powder for additive manufacturing>

The metal powder for additive manufacturing corresponds to toner or ink in a conventional two-dimensional printer. The metal powder for additive manufacturing is an aluminum alloy powder containing, to aluminum (Al) as its main component, at least one selected from iron (Fe), manganese (Mn), chromium (Cr), nickel (Ni) and zirconium (Zr).

The content of the at least one selected from the iron, manganese, chromium, nickel and zirconium is not less than 0.20% by mass, preferably not less than 1% by mass, more preferably not less than 2% by mass, even more preferably not less than 4% by mass, particularly preferably not less than 5% by mass, and most preferably not less than 7% by mass. Also, this content is not more than 13% by mass, preferably not more than 9% by mass, and more preferably not more than 8% by mass. By limiting the above content within the above range, an additive manufactured object manufactured using the above metal powder for additive manufacturing has not only high relative density but also excellent high-temperature strength and high-temperature Young's modulus. If the content is higher than the above range, production of the metal powder for additive manufacturing could be difficult since the melting point of the powder is high. If the content is below the above range, it is likely that an additive manufactured object manufactured using the above metal powder for additive manufacturing can not improve sufficiently in high-temperature strength, especially high-temperature 0.2% proof stress.

The total content of the iron, manganese, chromium, nickel and zirconium is not less than 0.20% by mass, preferably not less than 1% by mass, more preferably not less than 2% by mass, even more preferably not less than 4% by mass, particularly preferably not less than 5% by mass, and most preferably not less than 10% by mass. Also, the total content is not more than 13% by mass, preferably not more than 12.5% by mass, and more preferably not more than 12% by mass. By limiting the total content within the above range, an additive manufactured object manufactured using the above metal powder for additive manufacturing has not only high relative density but also excellent high-temperature strength and high-temperature Young's modulus. If the content is higher than the above range, producing the metal powder for additive manufacturing could be difficult since the melting point of the powder is high. On the other hand, if the content is below the above range, an additive manufactured object manufactured using the metal powder for additive manufacturing cannot improve sufficiently in high-temperature strength, especially high-temperature 0.2% proof stress.

The content of the iron in the metal powder for additive manufacturing is desirably less than 4.5% by mass, more desirably not more than 3% by mass, and even more desirably not more than 2% by mass. If the metal powder contains not less than 4.5% by mass of iron, an additive manufactured object manufactured using this metal powder must be extremely brittle, and thus cracks such as interlayer cracks (delamination) could occur.

The above metal powder for additive manufacturing may further contain silicon. The content of the silicon is preferably less than 1% by mass, and more preferably less than 0.5% by mass. If the content is not less than 1% by mass, the high-temperature strength and/or ductility of an additive manufactured object manufactured using the above metal powder could be decreased, and cracks such as solidification cracks could be generated.

The metal powder for additive manufacturing may contain a small amount of impurity elements. The impurity elements may be unavoidable impurities that are unavoidably mixed into the aluminum alloy powder when producing the aluminum alloy powder, or may be intentionally added modifying elements. The content of such impurity elements is not particularly limited, but is preferably not more than 2% by mass, more preferably not more than 1% by mass, even more preferably not more than 0.5% by mass, and particularly preferably not more than 0.2% by mass.

Specific examples of such impurity elements include magnesium (Mg), copper (Cu), zinc (Zn), lithium (Li), silicon (Si), iron (Fe), manganese (Mn), chromium (Cr), nickel (Ni), titanium (Ti), calcium (Ca), sodium (Na), strontium (Sr), yttrium (Y), niobium (Nb), molybdenum (Mo), tungsten (W), antimony (Sb), beryllium (Be), phosphorus (P), vanadium (V), tin (Sn), lead (Pb), bismuth (Bi), cobalt (Co), silver (Ag), gallium (Ga), scandium (Sc), cerium (Ce), boron (B), carbon (C), nitrogen (N), oxygen (O), etc.

The content of each element in the metal powder for additive manufacturing can be measured using, e.g., the ICP optical emission spectroscopic analysis method or the inert gas melting-infrared ray absorption method.

The particle diameters of the particles of the metal powder for additive manufacturing are not particularly limited, but the volume-based average particle diameter (median diameter $d_{50}$) of the powder is preferably not less than 1 $\mu$m, more preferably not less than 5 $\mu$m, even more preferably not less than 10 $\mu$m, and particularly preferably not less than 15 $\mu$m. If the average particle diameter is less than 1 $\mu$m, the flowability of the powder decreases, thus making it impossible to form a uniform powder layer during the manufacturing steps of an additive manufactured object. The average particle diameter is preferably not more than 200 $\mu$m, more preferably not more than 150 $\mu$m, even more preferably not more than 100 $\mu$m, and particularly preferably not more than 60 pm. If the average particle diameter is more than 200 $\mu$m, the powder could get caught on a squeegee in the step of additive manufacturing, making it difficult to densely spread the powder.

The average degree of sphericity of the particles of the metal powder for additive manufacturing is not particularly limited, but is desirably 0.9 or more and 1.0 or less. If the average degree of sphericity is less than 0.9, the flowability of the powder should decrease, thus making it impossible to form a uniform powder layer in the steps of additive manufacturing.

The oxygen content in the metal powder for additive manufacturing is not particularly limited, but is preferably not less than 0.001% by weight. Also, the oxygen content is preferably not more than 0.5% by weight, and more preferably not more than 0.2% by weight. If the oxygen content is higher than this range, the oxygen should cause defects in the additive manufactured object, thus deteriorating the mechanical properties. If the oxygen content is below this range, the powder could ignite spontaneously.

The moisture content in the metal powder for additive manufacturing is not particularly limited, but is preferably not less than 0.001% by weight. Also, the moisture content is preferably not more than 0.5% by weight, and more preferably not more than 0.2% by weight. If the moisture content is higher than this range, gas pores should occur in the additive manufactured object, thus deteriorating the mechanical properties. Setting the moisture content below this range is industrially quite difficult, and unrealistic.

The metal powder for additive manufacturing can be produced by, e.g., gas atomization or water atomization, but can also be produced using a different method such as the rotating electrode method, plasma atomization, centrifugal force atomization, mechanical alloying or a chemical process.

< Manufacturing method of an additive manufactured object>

Next, a method of manufacturing an additive manufactured object using the metal powder for additive manufacturing is described.

The additive manufactured object according to the present invention is manufactured by repeating, a plurality of times, a first step of forming a powder layer containing the metal powder for additive manufacturing and a second step of solidifying the metal powder at a predetermined portion of the powder layer, thereby forming a metal layer, such that a plurality of the metal layers is stacked and joined together.

While, in the present invention, the powder bed fusion method is used, which is one of additive manufacturing methods, a different additive manufacturing method such as directed energy deposition may be used. Also, an indirect additive manufacturing method such as binder jetting or fused deposition modeling may be used.

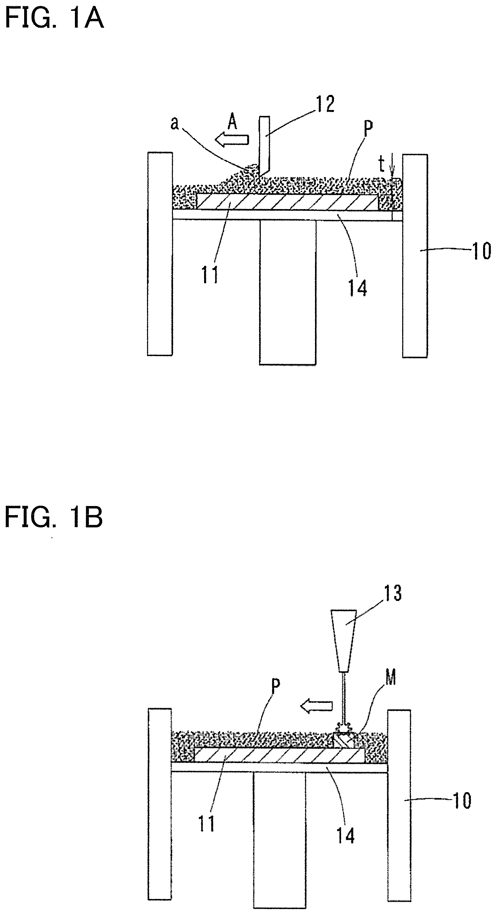

Specifically, first, the first step is performed, in which, as illustrated in Fig. 1A, by moving a squeegee 12 in a horizontal direction (direction of arrow A), a metal powder a for additive manufacturing is fed onto a substrate 11 placed on a stage 14 in a chamber 10, and a powder layer P containing the metal powder a for additive manufacturing is formed on the substrate 11. At this time, by adjusting the position of the stage 14, which is movable vertically, the powder layer P can be formed to a desired thickness t.

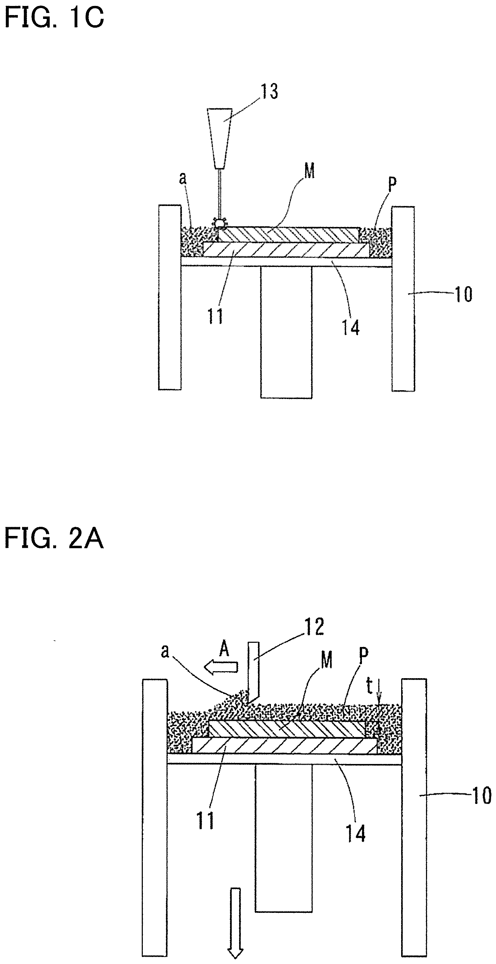

Next, the second step is performed. In the second step, as illustrated in Fig. 1B, by irradiating portions of the surface of the metal powder layer P with a laser beam from a laser beam scanner 13, the irradiated portions of the metal powder are heated. That is, as illustrated in Fig. 1C, by applying a laser beam along desired scanning paths, the laser-irradiated portions are melted and solidified or solidified by sintering, thus forming a metal layer M.

Next, the first step is repeated, in which as illustrated in Fig. 2A, with the stage 14 lowered by a distance corresponding to the desired thickness of the next powder layer, by moving the squeegee 12 in the horizontal direction (direction of arrow A), the metal powder a for additive manufacturing is fed onto the metal layer M, and a powder layer P containing the metal powder a for additive manufacturing is formed above the substrate 11.

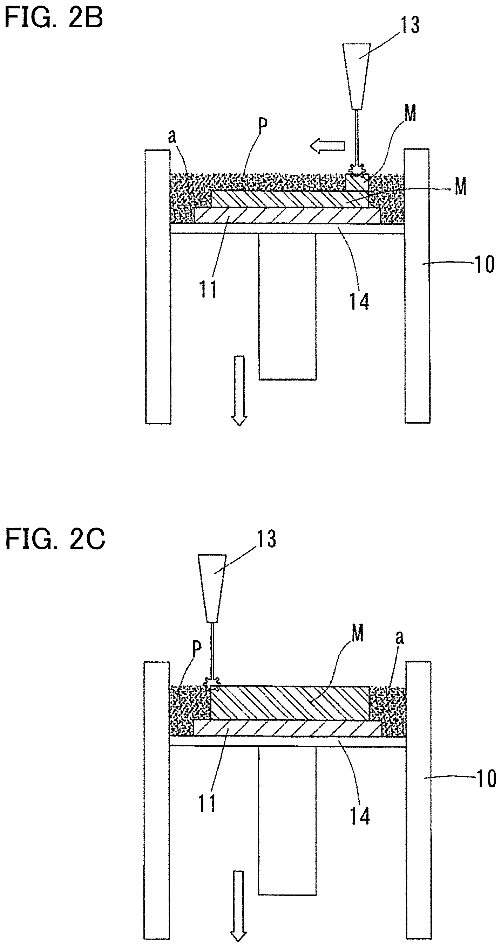

Next, the second step is repeated, in which as illustrated in Fig. 2B, by irradiating portions of the surface of the metal powder layer P with a laser beam from the laser beam scanner 13, the irradiated portions of the metal powder are heated. That is, as illustrated in Fig. 2C, by applying a laser beam along desired scanning paths, the laser-irradiated portions are melted and solidified or solidified by sintering, thus forming another metal layer M. In this step, when the metal powder P is melted and solidified or is solidified by sintering, thereby newly forming a metal layer M, completing the second step. When the new metal layer M is formed by melting and solidifying or solidifying by sintering the powder layer P, the newly formed metal layer M is joined to the metal layer M formed before and located under at this time, the newly formed metal layer M are integrally combined together.

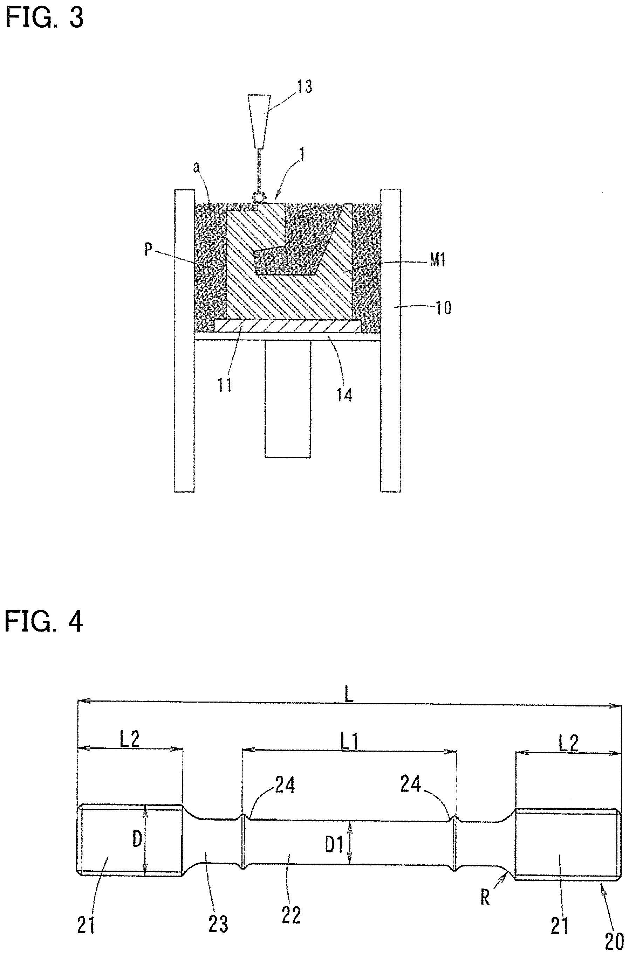

By alternately repeating the first step and the second step, an additive manufactured object M1 comprising a plurality of the metal layers M that is stacked and joined together is manufactured as illustrated in Fig. 3.

The additive manufactured object comprising a plurality of the metal layers stacked and joined together can be manufactured, for example, based on sliced data converted from three-dimensional data of the intended additive manufactured object obtained by a three-dimensional CAD. The sliced data shows shapes showing cross sections of a plurality of layers obtained by dividing three-dimensional data of the additive manufactured object such that the layers are separated in the vertical direction and have a predetermined layer thickness t. The substrate 11 is vertically moved by the stage 14 based on the predetermined layer thickness t, and predetermined areas of a plurality of the metal powder layers P stacked in the vertical direction are irradiated with a laser beam based on the above sliced data, so that the metal powder is locally melted and solidified or is solidified by sintering, and an additive manufactured object having a desired shape can be manufactured.

In the second step, the irradiation conditions when irradiating the metal powder layers P with a laser beam, i.e., the laser power, the scanning speed, the scanning intervals, etc., can be appropriately optimized such that, for example, the laser power is within the range of not more than 10,000 W, the scanning speed is within the range of not more than 30,000 mm/s, and the scanning intervals are within the range of not more than 50 mm. Also, the layer thickness t can be appropriately optimized, e.g., within the range of not more than 10 mm.

The inventors' research revealed that an additive manufactured object having a high relative density is obtained by irradiating the metal powder with a laser beam under conditions in which the volume energy density $E_d$ (J/mm$^3$), calculated by the equation:

$$E_d = P / (V \cdot s \cdot t),$$

where P is the laser power (W), V is the scanning speed (mm/s), s is the scanning intervals (mm), and t is the layer thickness (mm), is optimized for respective powder properties of the metal powder such as its metal powder composition, particle size distribution, and powder shape.

The volume energy density in the optimum laser irradiation conditions for manufacturing the dense additive manufactured object of the present invention (i.e., with high relative density) is not particularly limited, but is preferably not less than 30 J/mm$^3$ and not more than 150 J/mm$^3$, more preferably not less than 40 J/mm$^3$ and not more than 120 J/mm$^3$, and even more preferably not less than 45 J/mm$^3$ and not more than 100 J/mm$^3$. If the volume energy density is below the above range, void defects should occur in the additive manufactured object due to failure to melt. Also, if higher than the above range, spherical gas pores should occur in the additive manufactured object due to the atmosphere gas rolled in or hydrogen derived from moisture adhering to the powder.

While a laser beam can be used as the heat source for melting and solidifying the metal powder, the heat source is not limited to a laser beam, and, for example, an electron beam or plasma may be used.

In the first and second steps of the manufacturing method of the present invention, the metal layers, the powder layers and the additive manufactured object may be preheated. The preheating temperature is preferably not less than 50°C, and more preferably not less than 150°C. Also, the preheating temperature is preferably not more than 500°C, more preferably not more than 400°C, and even more preferably not more than 250°C. If the preheating temperature is less than 50°C, it is impossible to sufficiently obtain a crack (delamination) reducing effect. If the preheating temperature is more than 500°C, the microstructure of the additive manufactured object will be coarsened, thus deteriorating the mechanical properties. For preheating, an electric heater attached to an additive manufacturing platform or a lower portion of a substrate is normally used, but, e.g., a ceramic heater or high-frequency induction heating may be used instead. Also, the heating may be carried out by scanning a heat source such as a laser beam or an electron beam.

The manufacturing method of the present invention may further include a third step, which is a step of heat-treating the additive manufactured object after the second step. The heat treatment temperature in the third step is preferably not less than 200°C, and more preferably not less than 250°C. Also, the heat treatment temperature is preferably not more than 650°C, more preferably not more than 500°C, and even more preferably not more than 450°C. If the heat treatment is performed at less than 200°C, the strength will not improve sufficiently. If the heat treatment is performed at more than 650°C, the microstructure of the additive manufactured object will be coarsened, thus deteriorating the mechanical properties, or, due to melting of a portion thereof, the shape of the additive manufactured object could change. In the third step, solution treatment (solid solution heat treatment) may be performed before the above heat treatment. As a furnace used for the heat treatment, an atmospheric furnace is normally used, but a gas atmosphere furnace may be used instead, for example, wherein the heat treatment may be performed in an inert gas such as nitrogen or argon atmosphere, or in a reducing gas such as hydrogen-atmosphere.

The duration of the above heat treatment is preferably not less than 0.1 hours, more preferably not less than 0.5 hours, and even more preferably not less than 1 hour, and also, preferably not more than 1,000 hours, more preferably not more than 500 hours, even more preferably not more than 100 hours, and particularly preferably not more than 30 hours. If the duration is less than 0.1 hours, the strength of the additive manufactured object may not improve sufficiently. On the other hand, if the duration is more than 1000 hours, the strength of the additive manufactured object could decrease due to overaging.

<Additive manufactured object>

The additive manufactured object of the present invention is composed of an aluminum alloy of a specific composition composing the metal powder with an aluminum alloy for additive manufacturing. That is, the additive manufactured object contains, to aluminum, at least one alloy element selected from iron, manganese, chromium, nickel and zirconium. The content of at least one selected from the iron, manganese, chromium, nickel and zirconium in the additive manufactured object is not less than 0.20% by mass, preferably not less than 1% by mass, more preferably not less than 2% by mass, even more preferably not less than 4% by mass, particularly preferably not less than 5% by mass, and most preferably not less than 7% by mass. Also, the content is not more than 13% by mass, preferably not more than 9% by mass, and more preferably not more than 8% by mass. By limiting the content within the above range, the additive manufactured object has not only high relative density but also excellent high-temperature strength and high-temperature Young's modulus. If the content is higher than the above range, manufacturing the additive manufactured object will be difficult since the melting point of the alloy is high, additionally the ductility of the additive manufactured object will decrease markedly. If the content is below the above range, the additive manufactured object cannot improve sufficiently in high-temperature strength, especially high-temperature 0.2% proof stress.

The total content of the iron, manganese, chromium, nickel and zirconium in the additive manufactured object is not less than 0.20% by mass, preferably not less than 1% by mass, more preferably not less than 2% by mass, even more preferably not less than 4% by mass, particularly preferably not less than 5% by mass, and most preferably not less than 10% by mass. Also, the total content is not more than 13% by mass, preferably not more than 12.5% by mass, and more preferably not more than 12% by mass. By limiting the total content within the above range, the additive manufactured object has not only high relative density but also excellent high-temperature strength and high-temperature Young's modulus. If the content is higher than the above range, manufacturing the additive manufactured object will be difficult since the melting point of the alloy is high, additionally the ductility of the additive manufactured object will decrease markedly. If the content is below the above range, the additive manufactured object cannot improve sufficiently in high-temperature strength, especially high-temperature 0.2% proof stress.

The iron content in the additive manufactured object is desirably less than 4.5% by mass, more desirably not more than 3% by mass, and even more desirably not more than 2% by mass. If the content is not less than 4.5% by mass is contained, the additive manufactured object of such a composition should be extremely brittle, and thus cracks such as interlayer cracks (delamination) could occur.

The additive manufactured object may further contain silicon. The silicon content is preferably less than 1% by mass, and more preferably less than 0.5% by mass. If the silicon content is not less than 1% by mass, the high-temperature strength and/or ductility of the additive manufactured object of such a composition could be decreased, and could cause cracks such as solidification cracks could be generated.

The additive manufactured object may contain a small amount of impurity elements. The impurity elements may be elements (unavoidable impurities) that are unavoidably mixed into the aluminum alloy powder when producing the aluminum alloy powder, or may be intentionally added modifying elements. The content of the impurity elements is not particularly limited, but is preferably not more than 2% by mass, more preferably not more than 1% by mass, even more preferably not more than 0.5% by mass, and particularly preferably not more than 0.2% by mass.

Specific examples of such impurity elements include magnesium (Mg), copper (Cu), zinc (Zn), lithium (Li), silicon (Si), iron (Fe), manganese (Mn), chromium (Cr), nickel (Ni), titanium (Ti), calcium (Ca), sodium (Na), strontium (Sr), yttrium (Y), niobium (Nb), molybdenum (Mo), tungsten (W), antimony (Sb), beryllium (Be), phosphorus (P), vanadium (V), tin (Sn), lead (Pb), bismuth (Bi), cobalt (Co), silver (Ag), gallium (Ga), scandium (Sc), cerium (Ce), boron (B), carbon (C), nitrogen (N), oxygen (O), etc.

The content of each element in the additive manufactured object can be measured using, e.g., the ICP optical emission spectroscopic analysis method or the inert gas melting - infrared ray absorption method, similar to measuring the content of each element in the metal powder for additive manufacturing.

The additive manufactured object of the present invention has a relative density of not less than 95% and not more than 100%. The relative density of the additive manufactured object is desirably not less than 98%, more desirably not less than 99%, and even more desirably not less than 99.5%.

If the relative density does not satisfy this range, the mechanical properties of the additive manufactured object will deteriorate markedly.

The relative density is calculated as the area proportion of the metal portions, i.e. the portions excluding the void portions by thresholding analysis of an optical microscope image (magnification 100x) on a vertical cross section (cross section parallel to the stacking direction) near the center of the additive manufactured object.

For improved mechanical strength, ductility, and thermal and electrical conductivity of the additive manufactured object, the relative density is desirably as high as possible.

The additive manufactured object has a high-temperature tensile strength of not less than 140 MPa at a test temperature of 150°C; not less than 130 MPa at a test temperature of 200°C; not less than 115 MPa at a test temperature of 250°C; not less than 95 MPa at a test temperature of 300°C; and not less than 57 MPa at a test temperature of 350°C.

Since the additive manufactured object has such a high-temperature tensile strength, the additive manufactured object has excellent heat resistance compared to conventional ones.

The additive manufactured object has a high-temperature 0.2% proof stress of not less than 115 MPa at a test temperature of 150°C; not less than 105 MPa at a test temperature of 200°C; not less than 95 MPa at a test temperature of 250°C; not less than 75 MPa at a test temperature of 300°C; and not less than 30 MPa at a test temperature of 350°C.

Since the additive manufactured object has such a high-temperature 0.2% proof stress, the additive manufactured object has excellent heat resistance compared to conventional ones.

Especially by limiting the high-temperature 0.2% proof stress at a test temperature of 350°C within the above range, the heat resistance tends to improve more sufficiently.

The additive manufactured object has a high-temperature Young's modulus of not less than 59 GPa at a test temperature of 200°C; not less than 52 GPa at a test temperature of 250°C; not less than 34 GPa at a test temperature of 300°C; and not less than 29 GPa at a test temperature of 350°C.

Since the additive manufactured object has such a high-temperature Young's modulus, the additive manufactured object has excellent rigidity in a high-temperature range compared to conventional ones.

The high-temperature tensile strength, high-temperature 0.2% proof stress and high-temperature Young's modulus of the additive manufactured object are each measured by a tensile test in a high-temperature atmosphere. Tensile test pieces having the shape shown in Fig. 4 are used in each high-temperature tensile test, and are held at respective measurement temperatures for 1 hour or more before conducting the test. The strain rate in the high-temperature tensile tests is 0.3%/min until 0.2% proof stress, and 7.5%/min until breakage after 0.2% proof stress.

The additive manufactured object has a normal-temperature elongation at break (ductility) of preferably not less than 9%, and more preferably not less than 15%. By setting the normal-temperature elongation at break to not less than 9%, sudden breakage of the additive manufactured object when a load is applied thereto is prevented, and the additive manufactured object also has excellent toughness and impact energy absorption property.

The normal-temperature elongation at break of the additive manufactured object is measured by a tensile test at normal temperature. A tensile test piece having the shape shown in Fig. 4 is used in the tensile test. The strain rate in the tensile test is 0.3%/min until 0.2% proof stress, and 7.5%/min until breakage after 0.2% proof stress.

If an aluminum-transition metal-based alloy powder such as the above-described metal powder for additive manufacturing is shaped using a conventional method such as casting or powder metallurgy, a coarse platelike or needle-like intermetallic compound forms because of its slow cooling rate, and the mechanical properties of the material deteriorate markedly.

On the other hand, it is known in, e.g., Patent Document 1 that, if an additive manufacturing method is used in which irradiation is performed with, e.g., a laser or an electron beam as in the above-described laser additive manufacturing method, additive manufacturing can be performed at an extremely high cooling rate ($10^3$ to $10^6$ K/s) due to rapid cooling solidification caused by irradiation with, e.g., a laser or an electron beam. Therefore, if such a rapid cooling solidification process is applied to an aluminum-transition metal-based alloy powder with such an additive manufacturing method, a supersaturated solid solution and/or a non-equilibrium phase are generated by forced solid solution of the transition metal elements, and a microstructure with finely dispersed intermetallic compounds that are highly stable at high temperature can be formed by heat treatment after the additive manufacturing. Also, some transition metal elements can form a stable solid solution with aluminum until high temperature. As a result, the additive manufactured object of the present invention has excellent mechanical properties at normal temperature and high temperature due to dispersion and precipitation strengthening caused by the intermetallic compounds with the transition metal, microstructural composite strengthening, grain boundary strengthening, and solid solution strengthening by the transition metal elements, etc.

Examples

Examples are presented below to describe the present invention in more detail, but the present invention is not limited to only the below-presented Examples. First, a measurement method is described.

(Measurement method)

[Content of respective elements in each metal powder for additive manufacturing]

The content of respective elements was measured with the ICP optical emission spectroscopic analysis method.

[Average particle diameter of the particles of each metal powder for additive manufacturing]

The particle size distribution of the powder was measured with the laser diffraction / scattering method. The average particle diameter was obtained as the particle diameter of the particle at the cumulative 50% in the volume-based particle size distribution, from the smaller particle diameter side. The average particle diameter is also expressed as "median diameter "$d_{50}$"".

[Volume energy density ($E_d$) in laser irradiation conditions]

The volume energy density ($E_d$ (J/mm$^3$)) of the laser beam in additive manufacturing was calculated by the equation $E_d = P / (V \cdot s \cdot t)$, where P is the power of the laser beam (W), V is the scanning speed (mm/s), s is the scanning intervals (mm), and t is the layer thickness (mm).

An additive manufactured object was manufactured by changing the laser power P(W), the scanning speed V(mm/s) and the scanning intervals s (mm) relative to each metal powder for additive manufacturing, and the density of the additive manufactured object obtained was measured with the Archimedes method. The density by the Archimedes method can be measured according to "JIS Z 2501: Sintered metal materials-Determination of density, oil content and open porosity". Based on the results, the optimum conditions for each metal powder for additive manufacturing were determined as conditions under which an additive manufactured object having the highest density was obtained. Also, the value of $E_d$ in the optimum conditions was calculated using the above formula.

[Processability for additive manufacturing (whether or not cracks formed)

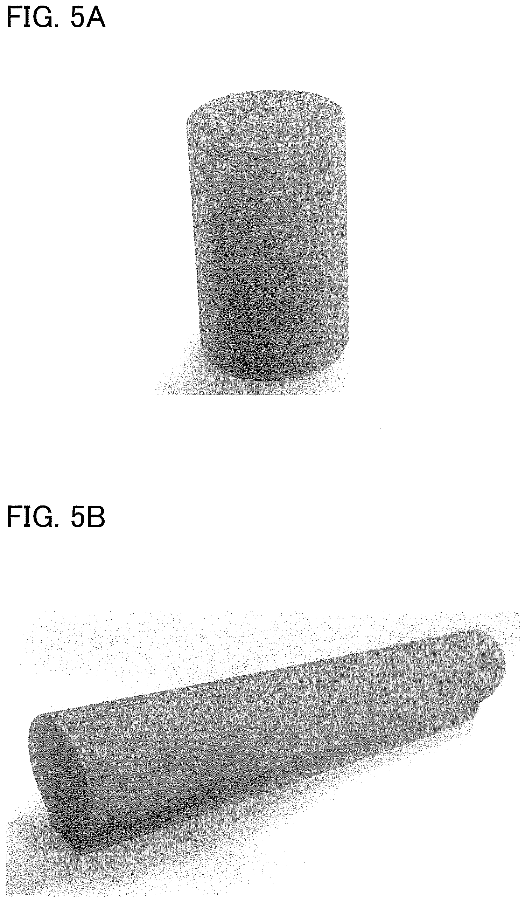

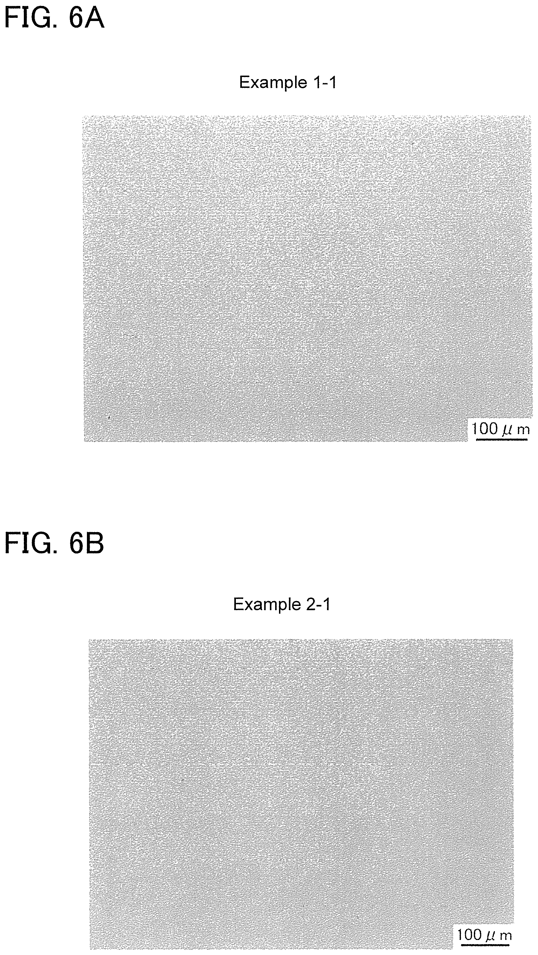

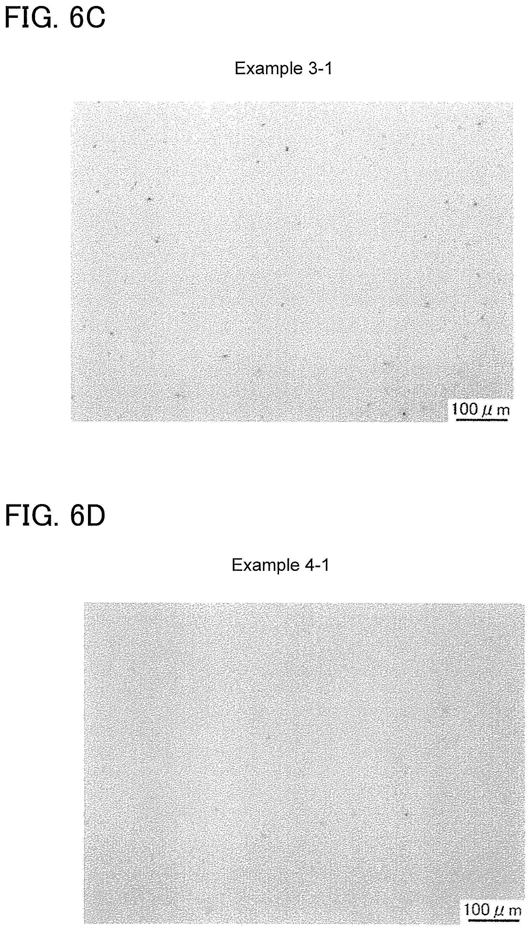

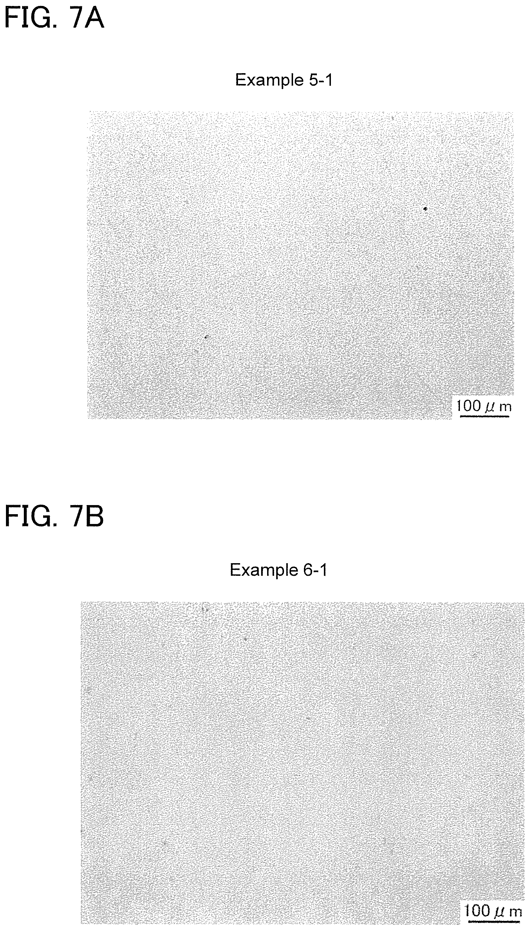

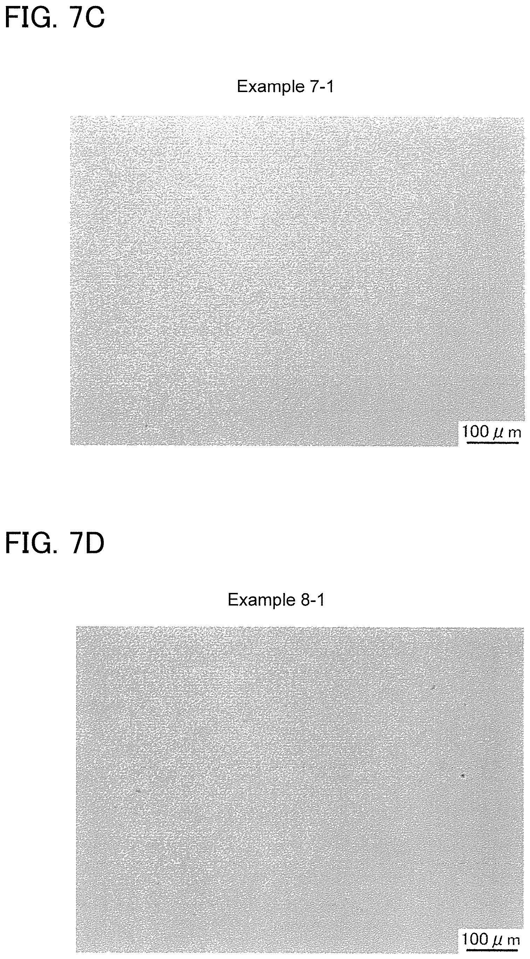

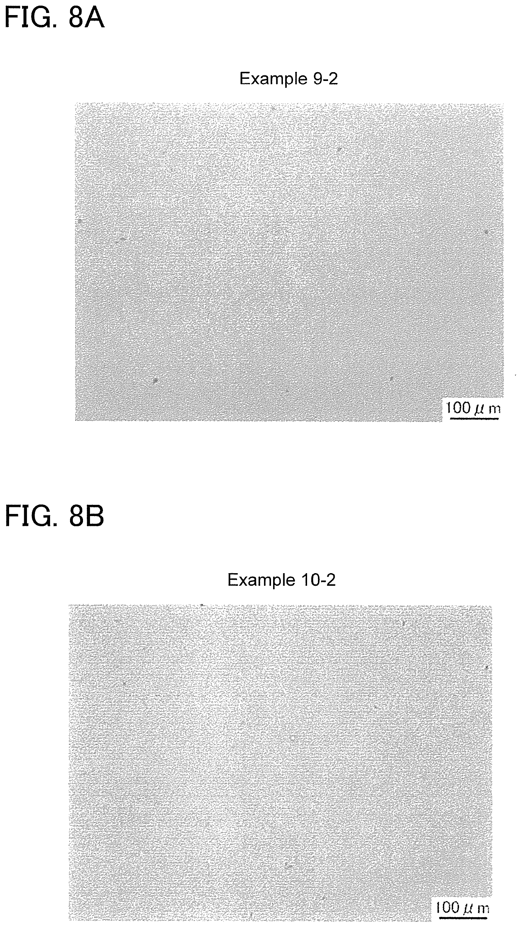

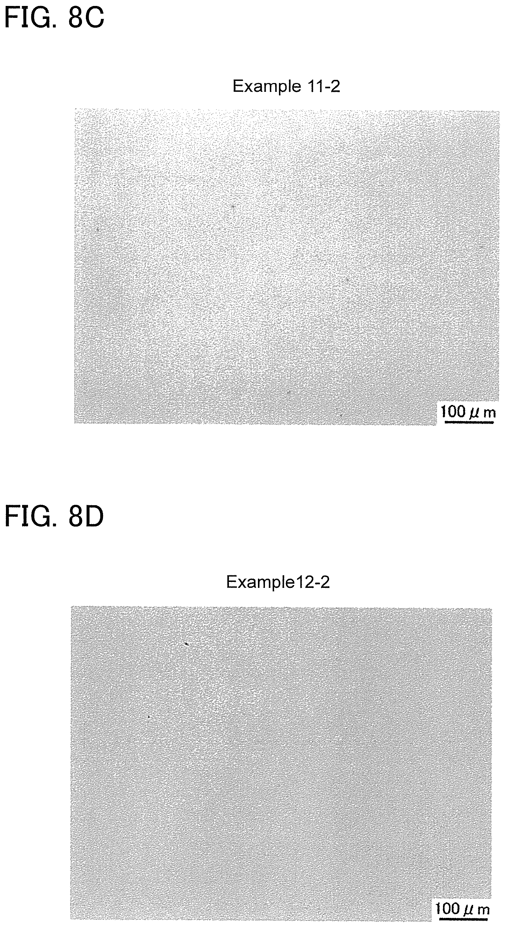

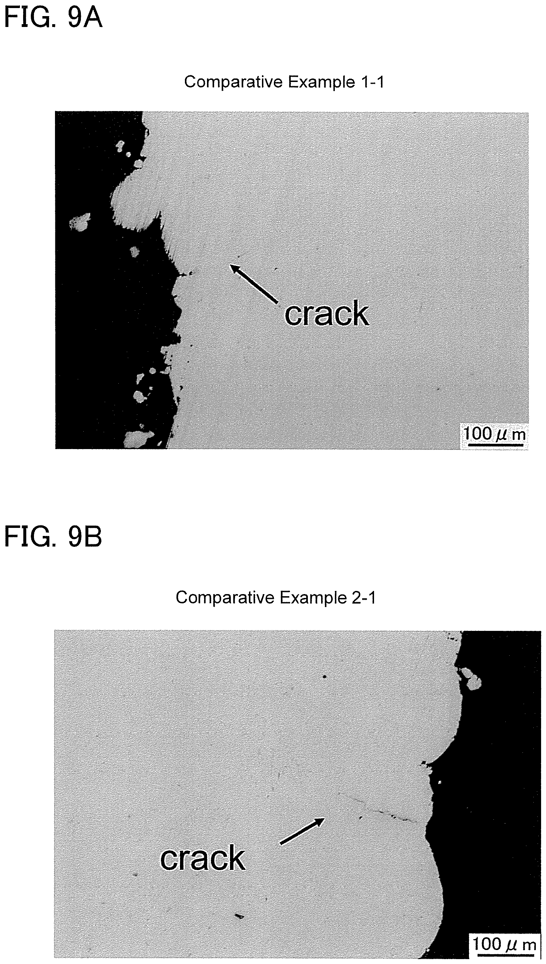

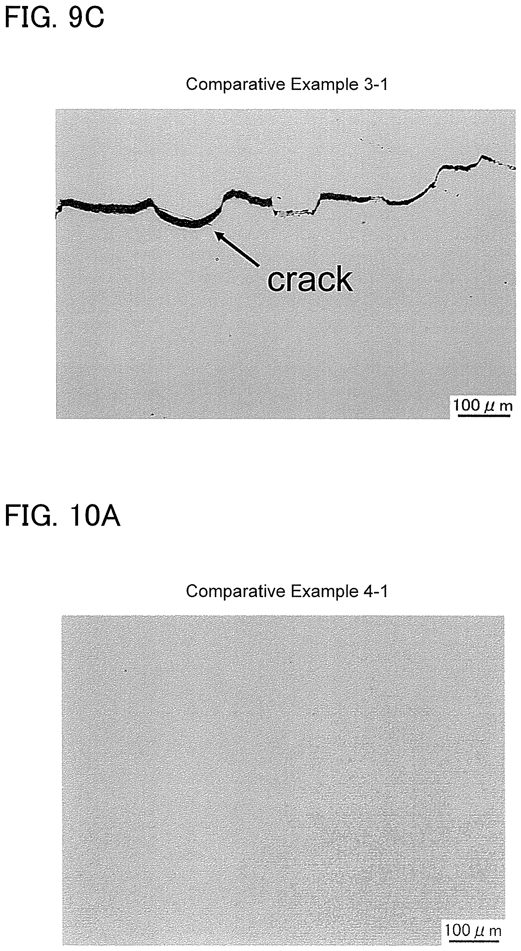

An optical microscope image (magnification 100x) on a vertical cross section of a columnar additive manufactured object (8mm in diameter, 15 mm in height) as shown in Fig. 5A that was obtained in each of Examples and Comparative Examples was taken using an optical microscope. The results thereof are shown in Figs. 6A to 6D, Figs. 7A to 7D, Figs. 8A to 8D, Figs. 9A to 9C and Figs. 10A to 10B. As the laser irradiation conditions for manufacturing the additive manufactured objects, the optimum conditions determined depending on the respective metal powders for additive manufacturing were used. Based on these images, cracks in the respective additive manufactured objects were checked.

[Relative density]

The relative density of each columnar additive manufactured object (diameter: 8mm, height: 15mm) was calculated as the area proportion of the metal portions, i.e. the portions excluding the void portions by thresholding analysis of an optical microscope image (magnification 100x) on a vertical cross section near its center of the additive manufactured object. The relative densities of additive manufactured objects having cracks were not measured.

[Tensile strength, 0.2% proof stress, elongation at break]

Tensile strength, 0.2% proof stress, and elongation at break were all measured using a tensile testing device with grade 1 or higher based on "JIS B 7721: Tension/compression testing machines- Calibration and verification of the force-measuring system". Tensile tests at normal temperature and high temperature were conducted, respectively, based on "JIS Z 2241: 2011: Metallic materials--Tensile testing--Method of test at room temperature" and "JIS G 0567:2020: Method of elevated temperature tensile test for steels and heat-resisting alloys".

Each test piece used was obtained by machining a columnar additive manufactured object (Diameter: 12mm, height: 80mm, as shown in Fig. 5B) that was manufactured in the perpendicular direction relative to the stacking direction into the shape of Fig. 4.

For the sizes of respective portions of the test piece 20, the total length L of the test piece 20 was set to 80 mm, the length L1 of the body 22 to 30 mm $\pm$ 0.1 mm, the diameter D1 of the body 22 to 6 mm $\pm$ 0.05 mm, the radius of curvature R of each shoulder 23 to 4.5 mm, the length L2 of each grip portion 21 to 15 mm, and the diameter D of each grip portion 21 to 10 mm.

The test pieces 20 were kept at respective test temperatures for one hour before conducting tensile tests at high temperature, and used at the respective tests.

(1) Tensile strength

After additive manufacturing, the normal-temperature tensile strength of each test piece before or after the heat treatment was measured with the below-described method. Additionally, the test pieces before or after the heat treatment were heated, respectively, to 150°C, 200°C, 250°C, 300°C and 350°C, and the high-temperature tensile strengths thereof were measured with the same (i.e., below-described) method.

While pulling each test piece 20 using a tensile testing device, tensile loads applied in the meantime were measured at appropriate time intervals until it was broken. The strain rate in each tensile test was set to 0.3%/min until the 0.2% proof stress was reached, and 7.5%/min until breakage after the 0.2% proof stress. At this time, the jig of the tensile testing device was adjusted to apply an axial force to each test piece 20 while gripping the grip portions 21 of the test piece 20. Then, the tensile strength of the test piece was calculated by dividing the maximum tensile load by the cross-sectional area of the body 22 before the test (= pi x D1 x D1 ÷ 4).

(2) 0.2% proof stress

After additive manufacturing, the normal-temperature 0.2% proof stress of each test piece before or after the heat treatment was measured with the below-described method. Additionally, the test pieces before or after the heat treatment were heated, respectively, to 150°C, 200°C, 250°C, 300°C and 350°C, and the high-temperature 0.2% proof stresses thereof were measured with the same (i.e., below-described) method.

While pulling the test piece 20 using a tensile testing device, the tensile load applied in the meantime was measured at appropriate time intervals until it was broken. At the same time, the amount of change in the distance between reference points of the test piece during the test was measured at appropriate time intervals using an extensometer. At this time, flanges 24 of the body of the tensile test piece 20 were defined as the reference points, and the length L1 of the body was defined as the distance between the reference points. The strain rate in each tensile test was set to 0.3%/min until the 0.2% proof stress was reached, and 7.5%/min until breakage after the 0.2% proof stress. The jig of the tensile testing device was adjusted to apply an axial force to the test piece 20 while gripping the grip portions 21 of the test piece 20. Based on the data of the above tensile load and change in the distance between the reference points, a nominal stress-nominal strain curve was obtained. The nominal stress was calculated by dividing the tensile load by the cross-sectional area of the body 22 before the test (= pi x D1 x D1 ÷ 4). The nominal strain was calculated as a percentage value obtained by dividing the measured value of the change in the distance between the reference points by the initial distance between the reference points measured before the test. The 0.2% proof stress value was calculated using the offset method described in "JIS Z 2241: 2011: Metallic materials-Tensile testing-Method of test at room temperature".

(3) Elongation at break

After additive manufacturing, the normal-temperature elongation at break of the test piece before or after the heat treatment was measured with the below-described method.

First, the flanges 24 of the body of the tensile test piece 20 were defined as reference points, and the length L1 of the body was defined as the distance between the reference points. The distance between the reference points before the test was measured, and defined as the initial distance between the reference points. Then, after conducting the tensile test with respect to the test piece 20, both fracture surfaces of the test piece 20 were matched with each other such that the center axes of the broken pieces would be aligned with each other, and the distance of the reference points after breakage was measured. The elongation at break was calculated as a percentage value obtained by dividing the difference between the distance between the reference points after breakage and the initial distance between the reference points, by the initial distance between the reference points. The strain rate in the tensile test was set to 0.3%/min until the 0.2% proof stress was reached, and 7.5%/min until breakage after the 0.2% proof stress.

(4) Young's modulus

After additive manufacturing, the test pieces before or after the heat treatment were heated to 150°C, 200°C, 250°C, 300°C and 350°C, respectively, and the high-temperature Young's moduli thereof were measured with the below-described method.

While pulling each test piece 20 until it was broken using a tensile testing device, the tensile load applied in the meantime was measured at appropriate time intervals. At the same time, the amount in change in the distance between reference points of the test piece during the test was measured at an appropriate time intervals using an extensometer. At this time, the flanges 24 of the body of the tensile test piece 20 were defined as the reference points, and the length L1 of the body was defined as the distance between the reference points. The strain rate in the tensile test was set to 0.3%/min until the 0.2% proof stress is reached, and 7.5%/min until breakage after the 0.2% proof stress. The jig of the tensile testing device was adjusted to apply an axial force to the test piece 20 while gripping the grip portions 21 of the test piece 20. Based on the data of the above tensile load and change in the distance between the reference points, a nominal stress-nominal strain curve was obtained. The nominal stress was calculated by dividing the tensile load by the cross-sectional area of the body 22 before the test (= pi x D1 x D1 ÷ 4). The nominal strain was calculated as a percentage value obtained by dividing a measured value of the change in the distance between the reference points by the initial distance between the reference points measured before the test. The Young's modulus was calculated as the inclination of the rising straight-line portion of the nominal stress-nominal strain curve right after starting the test.

[Heat treatment conditions and Vickers hardness]

Additive manufactured objects manufactured in each Example were subjected to heat treatment to predetermined temperatures at 200°C to 550°C for 1 to 30 hours in an atmospheric furnace.
Specifically, after 1 hour, 3 hours, 5 hours, 7 hours, 10 hours, 20 hours and 30 hours passed, during which periods the additive manufactured objects were kept at respective predetermined temperatures in the furnace, the additive manufactured objects were removed from the furnace and cooled to a normal temperature, and then the Vickers hardnesses (Hv0.2) thereof were measured with the below-described method while applying a load of 0.2 kgf.
The Vickers hardnesses (Hv0.2) were measured according to "JIS Z 2244: 2009: Vickers hardness test-Test method"".

[Cross-sectional microstructure]

A horizontal cross section (cross section perpendicular to the stacking direction) of an additive manufactured object manufactured in each Example was observed using a scanning transmission electron microscope (STEM).

(Examples 1-1 to 8-1, Reference Examples 9-1 to 12-1, Examples 1-2 to 12-2, Comparative Examples 1-1 to 5-1, 1-2 to 5-2)

Using the various metal powders for additive manufacturing shown in Table 1, additive manufactured objects were manufactured with an additive manufacturing method of the laser powder bed fusion (laser additive manufacturing method). The metal powders for additive manufacturing were produced with a nitrogen gas atomization method.

The laser additive manufacturing device used is EOSINT M280 by EOS in Germany, which is equipped with an ytterbium (Yb) fiber laser (laser wavelength: about 1070 nm) having a spot diameter of about 0.1 mm and a maximum power of 400 W, as a heat source.

As the laser irradiation conditions (volume energy density ($E_d$)) for additive manufacturing, conditions under which an additive manufactured object having the highest density could be obtained (optimum conditions) were selected for each powder.

Preheating of the metal layers, the powder layers, and the additive manufactured objects was carried out as follows: preheating was carried out at 35°C or 200°C before additive manufacturing by an electric heater attached under a building platform of the laser additive manufacturing device, and the heating temperature was controlled to the above temperature during the additive manufacturing by monitoring the temperature of a thermocouple mounted inside the additive manufacturing platform.

Some properties of the additive manufactured objects obtained are shown in Tables 2 and 3.

Examples of the shapes of the additive manufactured objects obtained are shown in Figs. 5A and 5B.

Optical microscope images on vertical cross sections of the additive manufactured objects obtained, which have the shape of Fig. 5A, are shown in Figs. 6A to 6D, Figs. 7A to 7D, Figs. 8A to 8D, Figs. 9A to 9C and Figs. 10A to 10B.

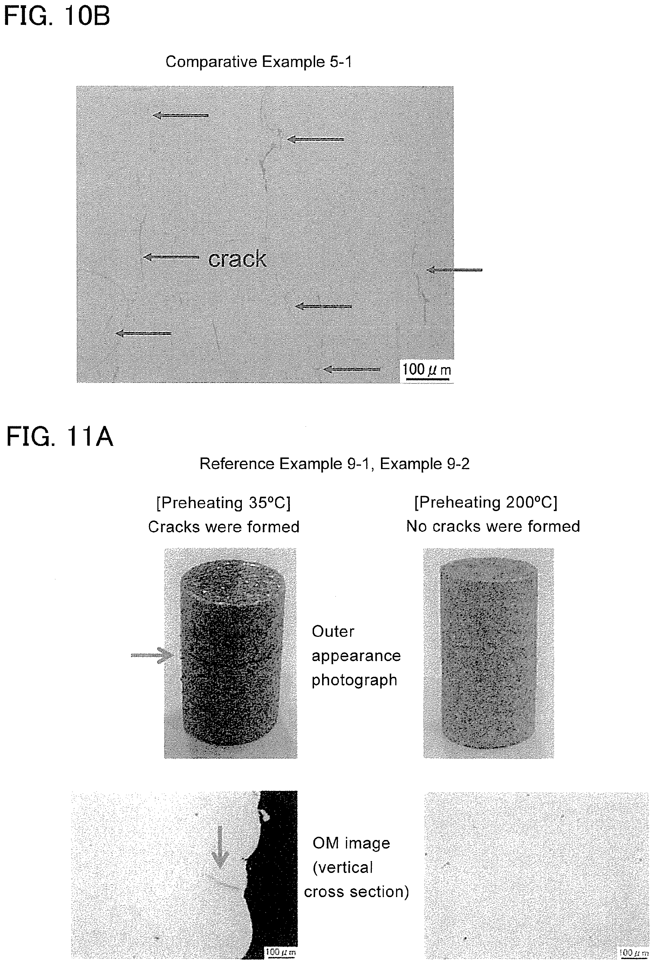

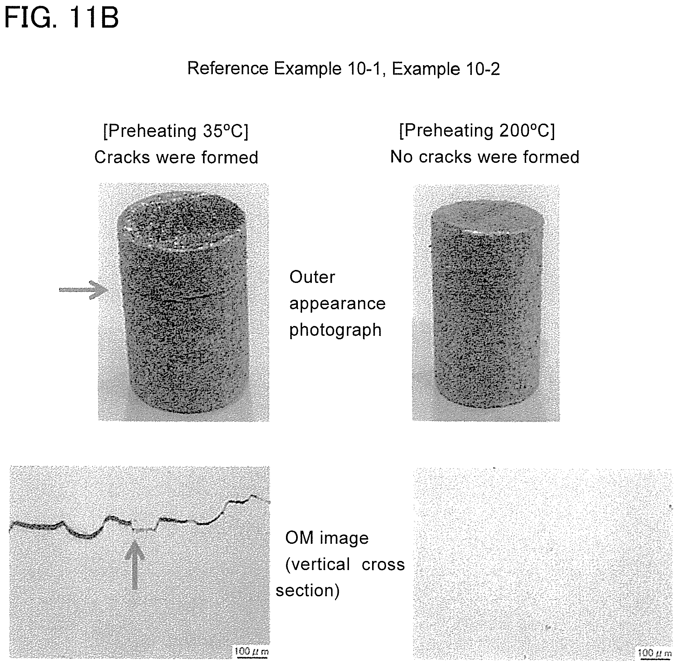

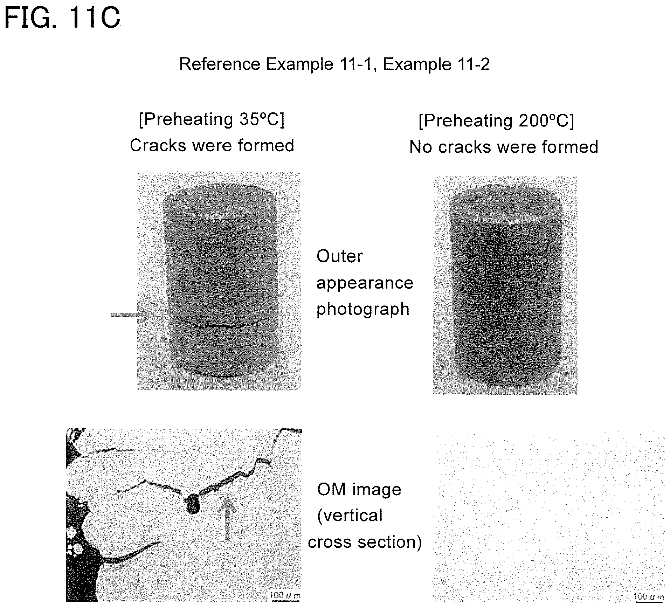

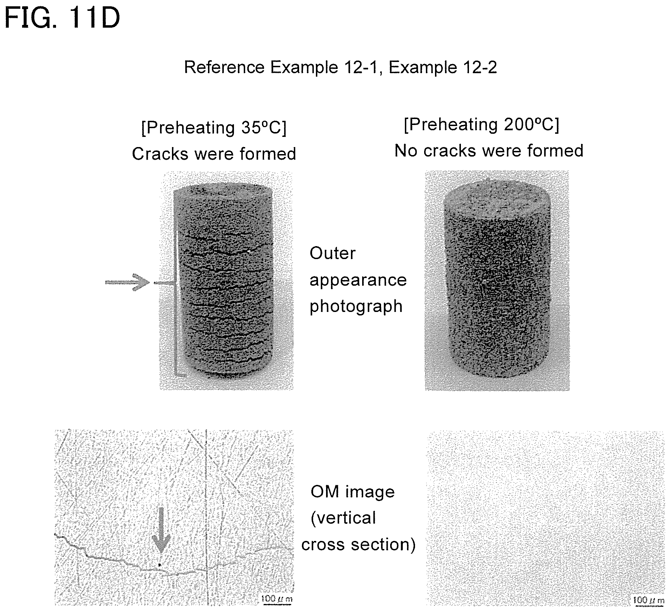

Outer appearance photographs and optical microscope (OM) images on vertical cross sections of the additive manufactured objects according to Reference Examples 9-1, 10-1, 11-1 and 12-1, and Examples 9-2, 10-2, 11-2 and 12-2, which were manufactured at preheating temperatures of 35°C and 200°C and had the shape of Fig. 5A, of the additive manufactured objects are shown in Figs. 11A to 11D.

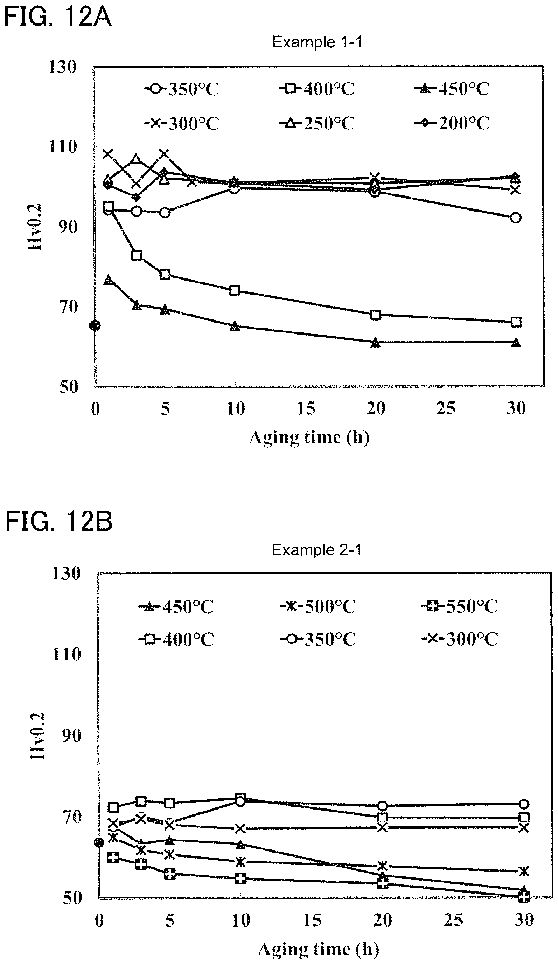

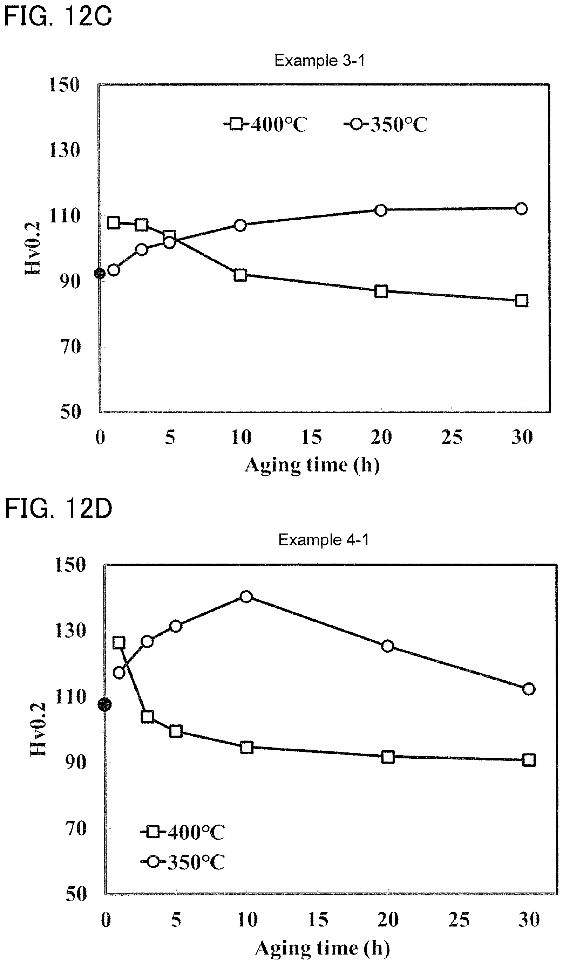

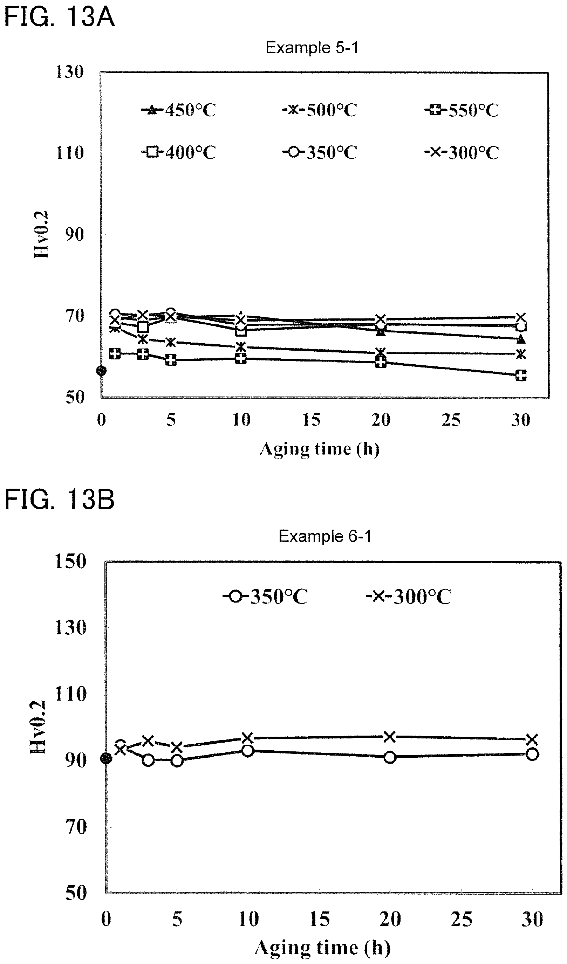

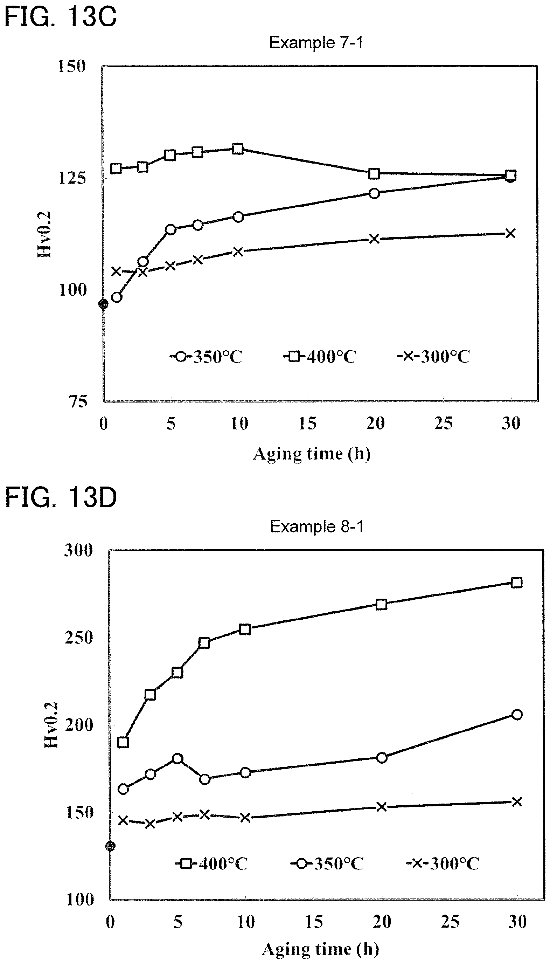

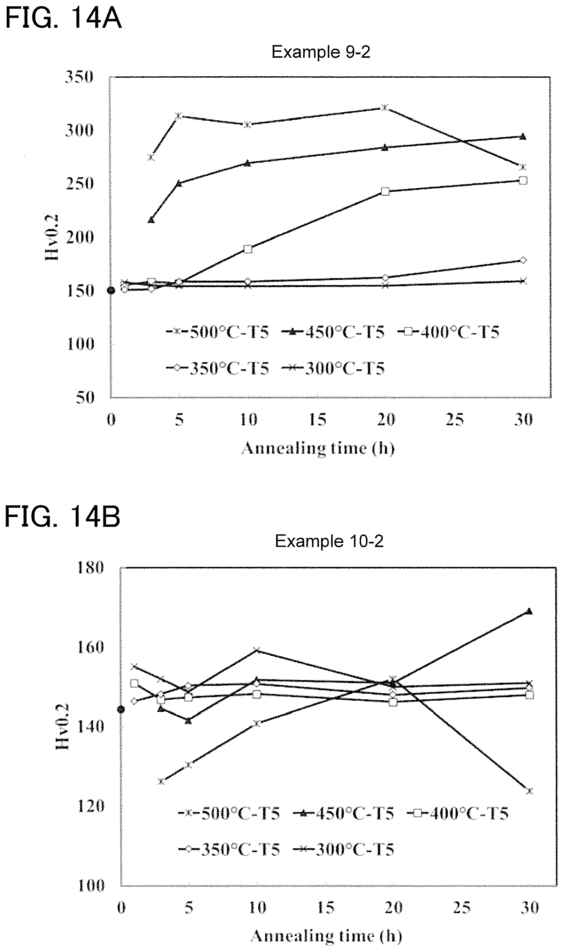

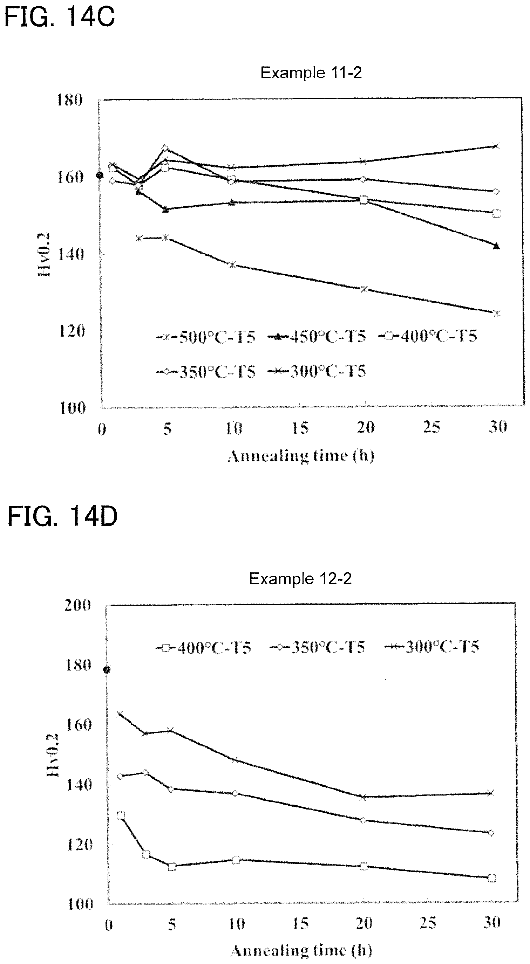

Further, a change in the Vickers hardness of each additive manufactured object by the heat treatment is shown in each of Figs. 12A to 12D, Figs. 13A to 13D and Figs. 14A to 14D. The black circle plotted on the left side (0 hours) in Figs. 12A to 12D, Figs. 13A to 13D and Figs. 14A to 14D indicates the hardness value of the as-built additive manufactured object (before the heat treatment).

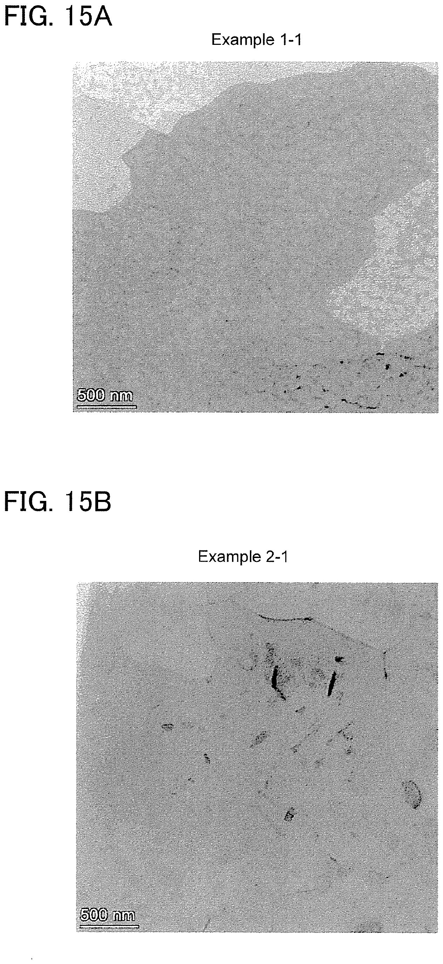

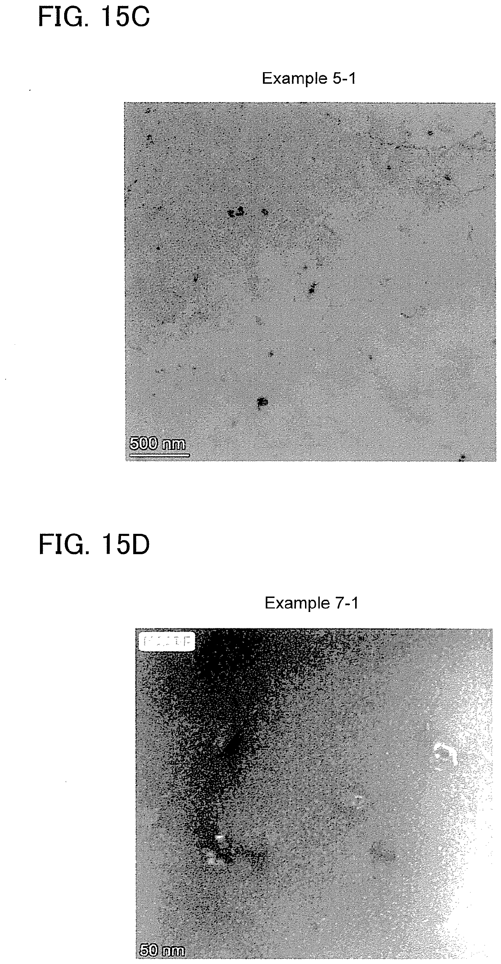

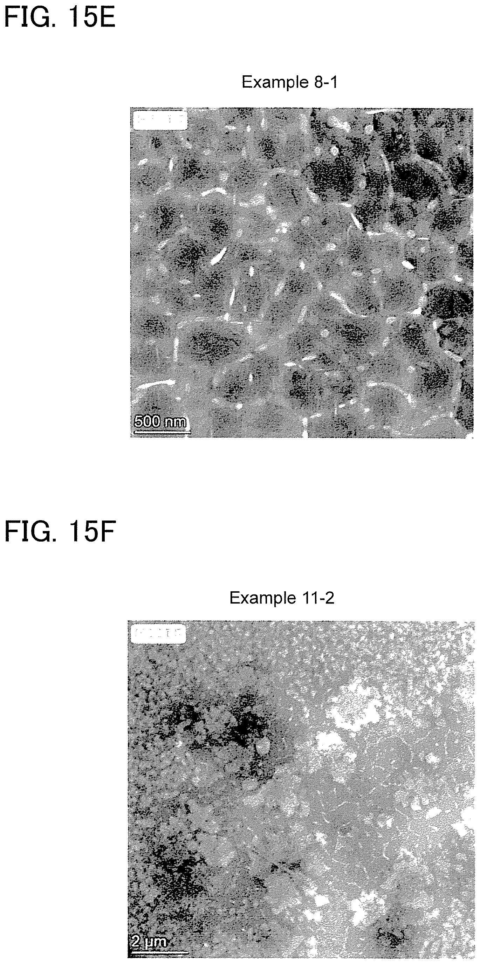

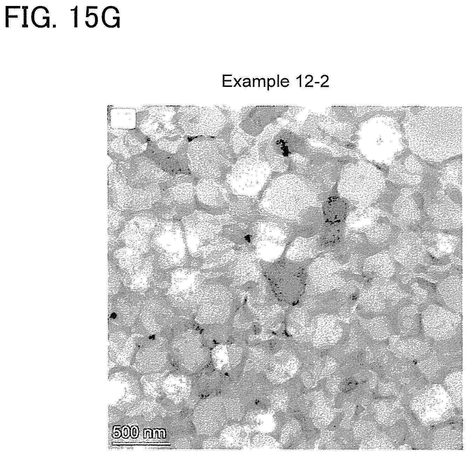

Still further, scanning transmission electron microscope (STEM) bright-field images or high-angle annular dark-field images on horizontal cross sections of the additive manufactured objects obtained (in Examples 1-1, 2-1, 5-1, 7-1, 8-1, 11-2 and 12-2) are shown in Figs. 15A to 15G.

Examples 9-2, 10-2, 11-2 and 12-2 are the same as Reference Examples 9-1, 10-1, 11-1 and 12-1 except for the preheating temperature of 200°C, and thus are related to Examples 9-2, 10-2, 11-2 and 12-2. Therefore, they are denoted as not Comparative Examples but Reference Examples, with their numbers each brought into conformity with the corresponding Example's number.

[Table 1]

|  | Average particle diameter ($\mu$m) | Si | Mg | Fe | Mn | Cr | Ni | Zr | Al |
|---|---|---|---|---|---|---|---|---|---|
| Alloy 1 | 24.8 | 0.07 | <0.01 | 2.8 | 0.01 | <0.01 | <0.01 | 0.01 | Bal. |
| Alloy 2 | 26.6 | 0.04 | <0.01 | 0.08 | 3.0 | <0.01 | <0.01 | <0.01 | Bal. |
| Alloy 3 | 26.0 | 0.07 | 0.02 | 0.09 | 4.8 | <0.01 | 0.01 | 0.02 | Bal. |
| Alloy 4 | 26.0 | 0.06 | <0.01 | 0.09 | 6.5 | <0.01 | 0.01 | 0.01 | Bal. |
| Alloy 5 | 25.2 | 0.05 | <0.01 | 0.07 | <0.01 | 3.0 | <0.01 | <0.01 | Bal. |
| Alloy 6 | 24.9 | 0.08 | <0.01 | 0.09 | 0.03 | 4.6 | <0.01 | 0.01 | Bal. |
| Alloy 7 | 28.2 | 0.07 | <0.01 | 0.02 | <0.01 | 4.0 | <0.01 | 1.5 | Bal. |
| Alloy 8 | 27.2 | 0.05 | 0.01 | 0.08 | 8.1 | 2.1 | <0.01 | <0.01 | Bal. |
| Alloy 9 | 26.5 | 0.09 | <0.01 | 0.10 | 7.3 | 3.9 | 0.01 | <0.01 | Bal. |
| Alloy 10 | 26.3 | 0.06 | <0.01 | 1.6 | 7.2 | 2.0 | 0.01 | <0.01 | Bal. |
| Alloy 11 | 27.6 | 0.06 | <0.01 | 1.6 | 5.4 | 5.3 | 0.01 | <0.01 | Bal. |

(continued)

| | Average particle diameter (μm) | Si | Mg | Fe | Mn | Cr | Ni | Zr | Al |
|---|---|---|---|---|---|---|---|---|---|
| Alloy 12 | 26.9 | 0.04 | <0.01 | 0.11 | <0.01 | 0.01 | 8.1 | 1.5 | Bal. |
| Comparative alloy 1 | 25.8 | 0.05 | <0.01 | 4.8 | 0.01 | 0.03 | <0.01 | 0.01 | Bal. |
| Comparative alloy 2 | 26.0 | 0.05 | <0.01 | 6.6 | 0.01 | 0.01 | 0.01 | 0.01 | Bal. |
| Comparative alloy 3 | 26.6 | 0.07 | <0.01 | 8.1 | 0.03 | 0.01 | <0.01 | 1.02 | Bal. |
| Comparative alloy 4 | 26.5 | 10.1 | 0.37 | 0.15 | 0.01 | <0.01 | 0.01 | <0.01 | Bal. |
| Comparative alloy 5 | 25.5 | 1.02 | 0.01 | 0.14 | <0.01 | <0.01 | <0.01 | 0.01 | Bal. |
| Note 1: The unit of each element is % by mass.<br>Note 2: "Bal."refers to Balance | | | | | | | | | |

[Table2]

[Table 3]

| | | | | Additive manufacturability · Relative density (Densification) | | | $E_d$ [*1] (J/mm³) | Before heat treatment | | | After heat treatment | | |
|---|---|---|---|---|---|---|---|---|---|---|---|---|---|
| | | Alloy | Optical microscope image | Preheating temperature (°C) | Crack | Relative density (%) | | Normal-temperature tensile strength (MPa) | Normal-temperature 0.2% proof stress (MPa) | Normal-temperature elongation at break (%) | Normal-temperature tensile strength (MPa) | Normal-temperature 0.2% proof stress (MPa) | Normal-temperature elongation at break (%) |
| Example | 1-1 | Alloy 1 | Fig. 6A | 35 | Not formed | 99.9 | 97.2 | 302 | 233 | 11.2 | 303 | 230 | 9.4 |
| | 1-2 | | | 200 | Not formed | - | - | - | - | - | - | - | - |
| | 2-1 | Alloy 2 | Fig. 6B | 35 | Not formed | 99.9 | 83.3 | 187 | 135 | 33.0 | 204 | 129 | 21.3 |
| | 2-2 | | | 200 | Not formed | - | - | - | - | - | - | - | - |
| | 3-1 | Alloy 3 | Fig. 6C | 35 | Not formed | 99.7 | 71.4 | 251 | 207 | 35.2 | 322 | 238 | 16.0 |
| | 3-2 | | | 200 | Not formed | - | - | - | - | - | - | - | - |
| | 4-1 | Alloy 4 | Fig. 6D | 35 | Not formed | 99.8 | 62.5 | 302 | 288 | 34.2 | 396 | 301 | 17.2 |
| | 4-2 | | | 200 | Not formed | - | - | - | - | - | - | - | - |
| | 5-1 | Alloy 5 | Fig. 7A | 35 | Not formed | 99.9 | 72.9 | 193 | 146 | 36.5 | 192 | 142 | 35.7 |
| | 5-2 | | | 200 | Not formed | - | - | - | - | - | - | - | - |
| | 6-1 | Alloy 6 | Fig. 7B | 35 | Not formed | 99.9 | 52.1 | 267 | 235 | 32.9 | 268 | 236 | 37.0 |
| | 6-2 | | | 200 | Not formed | - | - | - | - | - | - | - | - |
| | 7-1 | Alloy 7 | Fig. 7C | 35 | Not formed | 99.9 | 62.5 | 301 | 289 | 31.4 | 418 | 409 | 16.3 |
| | 7-2 | | | 200 | Not formed | - | - | - | - | - | - | - | - |
| | 8-1 | Alloy 8 | Fig. 7D | 35 | Not formed | 99.8 | 50.0 | 411 | 331 | 25.5 | 457 | 353 | 17.7 |
| | 8-2 | | | 200 | Not formed | - | - | - | - | - | - | - | - |
| Reference Example | 9-1 | Alloy 9 | Fig. 8A | 35 | Formed | - | - | - | - | - | - | - | - |
| Example | 9-2 | | | 200 | Not formed | 99.9 | 62.5 | 446 | 256 | 4.1 | 290 | 288 | 0.5 |
| Reference Example | 10-1 | Alloy 10 | Fig. 8B | 35 | Formed | - | - | - | - | - | - | - | - |
| Example | 10-2 | | | 200 | Not formed | 99.9 | 71.4 | 468 | 296 | 5.6 | 339 | 338 | 0.1 |
| Reference Example | 11-1 | Alloy 11 | Fig. 8C | 35 | Formed | - | - | - | - | - | - | - | - |
| Example | 11-2 | | | 200 | Not formed | 99.9 | 69.4 | 492 | 318 | 5.1 | - | - | - |
| Reference Example | 12-1 | Alloy 12 | Fig. 8D | 35 | Formed | - | - | - | - | - | - | - | - |
| Example | 12-2 | | | 200 | Not formed | 99.9 | 83.3 | 589 | 530 | 1.5 | - | - | - |
| Comparative Example | 1-1 | Comparative alloy 1 | Fig. 9A | 35 | Formed | - | - | - | - | - | - | - | - |
| | 1-2 | | | 200 | Formed | - | - | - | - | - | - | - | - |
| | 2-1 | Comparative alloy 2 | Fig. 9B | 35 | Formed | - | - | - | - | - | - | - | - |
| | 2-2 | | | 200 | Formed | - | - | - | - | - | - | - | - |
| | 3-1 | Comparative alloy 3 | Fig. 9C | 35 | Formed | - | - | - | - | - | - | - | - |
| | 3-2 | | | 200 | Formed | - | - | - | - | - | - | - | - |
| | 4-1 | Comparative alloy 4 | Fig. 10A | 35 | Not formed | 99.8 | 69.4 | 462 | 302 | 8.1 | 355 | 235 | 9.1 |
| | 4-2 | | | 200 | Not formed | - | - | - | - | - | - | - | - |
| | 5-1 | Comparative alloy 5 | Fig. 10B | 35 | Formed | - | - | - | - | - | - | - | - |
| | 5-2 | | | 200 | Formed | - | - | - | - | - | - | - | - |

Note: "-" in the table means "not measured"

[*1]···Ed refers to volume energy density in laser irradiation conditions

| | | Heat treatment conditions | High-temperature tensile strength (MPa) | | | | | High-temperature 0.2% proof stress (MPa) | | | | | High-temperature Young's modulus (GPa) | | | | |
|---|---|---|---|---|---|---|---|---|---|---|---|---|---|---|---|---|---|
| | | | 150℃ | 200℃ | 250℃ | 300℃ | 350℃ | 150℃ | 200℃ | 250℃ | 300℃ | 350℃ | 150℃ | 200℃ | 250℃ | 300℃ | 350℃ |
| Example | 1-1 | 300℃×5h | 257 | 238 | 211 | 181 | 145 | 220 | 211 | 192 | 168 | 138 | 67 | 60 | 57 | 58 | 51 |
| | 2-1 | 400℃×10h | 156 | 138 | 118 | 97 | 81 | 118 | 108 | 96 | 79 | 61 | 56 | 59 | 54 | 48 | 47 |
| | 3-1 | 350℃×20h | 271 | 242 | 211 | 177 | 141 | 212 | 191 | 165 | 139 | 91 | 71 | 63 | 60 | 49 | 43 |
| | 4-1 | 350℃×10h | 329 | 299 | 256 | 201 | 162 | 266 | 238 | 203 | 145 | 93 | 69 | 71 | 60 | 52 | 37 |
| | 5-1 | 350℃×5h | 144 | 131 | 117 | 104 | 90 | 122 | 115 | 105 | 91 | 71 | 61 | 59 | 58 | 53 | 45 |
| | 6-1 | 300℃×7h | 217 | 203 | 183 | 164 | 135 | 195 | 185 | 164 | 140 | 104 | 68 | 64 | 61 | 53 | 49 |
| | 7-1 | 400℃×7h | 277 | 242 | 202 | 164 | 110 | 237 | 203 | 161 | 115 | 66 | 65 | 59 | 55 | 46 | 32 |
| | 8-1 | 350℃×5h | 402 | 365 | 313 | 260 | 214 | 320 | 297 | 257 | 208 | 161 | 76 | 70 | 68 | 58 | 54 |
| | 9-2 | 400℃×10h | 300 | 309 | 287 | 241 | 176 | 246 | 221 | 177 | 147 | 107 | 65 | 57 | 55 | 46 | 32 |
| | 10-2 | 450℃×30h | 273 | 288 | 272 | 244 | 192 | 223 | 202 | 172 | 151 | 111 | 76 | 70 | 68 | 58 | 54 |
| | 11-2 | No heat treatment after additive manufacturing | 413 | 376 | 320 | 256 | 193 | 296 | 279 | 244 | 198 | 148 | 76 | 70 | 68 | 58 | 54 |
| | 12-2 | No heat treatment after additive manufacturing | 426 | 320 | 218 | 104 | 57 | 315 | 224 | 134 | 79 | 35 | 71 | 64 | 52 | 34 | 29 |
| Comparative Example | 1-1 | – | – | – | – | – | – | – | – | – | – | – | – | – | – | – | – |
| | 2-1 | – | – | – | – | – | – | – | – | – | – | – | – | – | – | – | – |
| | 3-1 | – | – | – | – | – | – | – | – | – | – | – | – | – | – | – | – |
| | 4-1 | 300℃×2h | 212 | 172 | 139 | 96 | 56 | 174 | 152 | 118 | 73 | 26 | 69 | 58 | 50 | 30 | 27 |
| | 5-1 | – | – | – | – | – | – | – | – | – | – | – | – | – | – | – | – |

(Results)

It turned out from the optical microscope images on vertical cross sections of additive manufactured objects (Figs. 6A to 6D, Figs. 7A to 7D, Figs. 8A to 8D, Figs. 9A to 9C and Figs. 10A to 10B) that the additive manufactured objects of Examples 1 to 12 had no cracks, and had a high relative density of 99.7% or more. On the other hand, cracks and void defects were generated in Comparative Examples 1 to 3 and 5. Additionally, it turned out that, in Figs. 11A to 11D, Reference Examples 9-1 to 12-1 had cracks perpendicular to the stacking direction (delamination) were generated as observed in the outer appearances and on the cross sections of the additive manufactured objects manufactured at a preheating temperature of 35°C (Reference Examples 9-1 to 12-1). On the other hand, in Examples 9-2 to 12-2, cracks were prevented due to release of residual stress and a reduction in thermal strain in the additive manufactured objects manufactured at a preheating temperature of 200°C (Examples 9-2 to 12-2), and thus these additive manufactured objects had a high relative density.

Also, it turned out from the graphs each showing a change in the Vickers hardness of the additive manufactured object by the heat treatment (Figs. 12A to 12D, Figs, 13A to 13D and Figs. 14A to 14D) that the hardness increased by the heat treatment within the specific temperature range in each Example.

Further, it turned out from the results of Tables 2 and 3 that the additive manufactured object of each Example had a high relative density of 99.5% or more, excellent high-temperature strength (high-temperature tensile strength, high-temperature 0.2% proof stress) and high-temperature Young's modulus in the high-temperature range of 150°C or more; and also has sufficient normal-temperature tensile strength, normal-temperature 0.2% proof stress, and normal-temperature elongation at break. On the other hand, it is apparent that the additive manufactured objects of Comparative Examples 1 to 3 and 5 did not have sufficient strength, since they had cracks. Also, although the additive manufactured object of Comparative Example 4 had no cracks, and had a high relative density of 99.5% or more, the high-temperature tensile strength and high-temperature 0.2% proof stress at 300°C or more, the high-temperature Young's modulus at 200°C or more, and the normal-temperature elongation at break were not preferable.

From the scanning transmission electron microscope (STEM) bright-field (BF) images and high-angle annular dark-field (HAADF) images on horizontal cross sections of additive manufactured objects in Figs 15A to 15G, fine crystallized and precipitated phases were dispersed both in the aluminum matrix and at the cell and grain boundaries in Examples 1-1 and 2-1, and they were transition metal-based intermetallic compounds with aluminum and iron (Example 1-1) and aluminum and manganese (Example 2-1), respectively. Since the diffusion rates of the transition metal elements in the aluminum were slow, the above transition metal-based intermetallic compounds could exist stably until high temperature. Therefore, the above intermetallic compounds suppressed the movement of dislocations and grain boundary slide, improving the high-temperature strength and the high-temperature Young's modulus mainly due to the dispersion and precipitation strengthening, microstructural composite strengthening and grain boundary strengthening.

In Example 5-1, no clear precipitated phases were identified, and the STEM-EDS analysis revealed that the chromium tends to form a solid solution in the matrix. Since the diffusion rate of the chromium in the aluminum is even slower than those of the iron and the manganese, the chromium formed a solid solution stably and contributed to solid solution strengthening until high temperatures, thus improving the high-temperature strength and the high-temperature Young's modulus.

In Example 7-1, since intermetallic compounds with aluminum and zirconium ($Al_3Zr$) were finely precipitated (~5nm) in the aluminum matrix and the chromium formed a solid solution similar to Example 5, the high-temperature strength and the high-temperature Young's modulus improved mainly due to the solid solution strengthening by the chrome and the precipitation strengthening by the $Al_3Zr$.

In Example 8-1, the high-temperature strength and the high-temperature Young's modulus improved due to dispersion and precipitation strengthening and microstructural composite strengthening by a network-shaped transition metal-based intermetallic compounds with aluminum and manganese that were crystalized and precipitated at the cell boundaries and in the aluminum matrix; grain boundary strengthening; and solid solution strengthening by supersaturated manganese and chromium.

In Example 11-2, the high-temperature strength and the high-temperature Young's modulus improved mainly due to dispersion and precipitation strengthening and microstructural composite strengthening by petal-shaped, plate-shaped, and granular various transition metal-based intermetallic compounds containing aluminum, manganese, chromium and iron; grain boundary strengthening; and solid solution strengthening by the various supersaturated transition metals.

In Example 12-2, the high-temperature strength and the high-temperature Young's modulus improved due to dispersion and precipitation strengthening and microstructural composite strengthening by a network-shaped transition metal-based intermetallic compounds with aluminum and nickel crystalized and precipitated at the cell boundaries and in the aluminum matrix; and precipitation strengthening by the intermetallic compounds with aluminum and zirconium ($Al_3Zr$).

It is estimated that, as also in the above Examples, since the additive manufactured objects of Examples 3-1, 4-1, 6-1, 9-2 and 10-2 were also composed of an aluminum alloy containing transition metal elements, the high-temperature strengths and the high-temperature Young's moduli improved due to, e.g., dispersion and precipitation strengthening by the transition metal-based intermetallic compounds; microstructural composite strengthening; grain boundary strengthening; and solid solution strengthening by the supersaturated transition metal elements.

DESCRIPTION OF REFERENCE NUMERALS

    10: Chamber
    11: Substrate
    12: Squeegee
    13: Laser beam scanner
    14: Stage
    20: Test piece
    21: Grip portion
    22: Body
    23: Shoulder
    24: Flange
    a: metal powder for additive manufacturing
    t: Thickness
    M: Metal layer
    M1: Additive manufactured object
    P: Powder layer
    L: Total length of the test piece
    L1: Length of the body (distance between reference points)
    L2: Length of the grip portion
    D: Diameter of the grip portion
    D1: Diameter of the body

R: Curvature Radius of the shoulder

**Claims**

1. A metal powder for additive manufacturing containing, to aluminum, not less than 0.20% by mass and not more than 13% by mass of at least one alloy element, selected from iron, manganese, chromium, nickel and zirconium, wherein the iron content in the metal powder is less than 4.5% by mass.

2. The metal powder according to claim 1, wherein the total content of the iron, the manganese, the chromium, the nickel and the zirconium is not less than 0.20% by mass and not more than 13% by mass.

3. The metal powder according to claim 1 or 2, further containing less than 1% by mass of silicon.

4. A manufacturing method of manufacturing an additive manufactured object, the manufacturing method comprising:

   a first step of forming a powder layer containing the metal powder according to any one of claims 1 to 3; and
   a second step of solidifying the metal powder at predetermined portions of the powder layer, thereby forming a metal layer,
   wherein by alternately repeating the first step and the second step, a plurality of the metal layers is stacked and joined together, thereby manufacturing the additive manufactured object.

5. The manufacturing method according to claim 4, wherein, in the first step and the second step, the metal layers, the powder layer and the additive manufactured object are preheated at a temperature of not less than 50°C and not more than 500°C.

6. The manufacturing method according to claim 4 or 5, further comprising a third step of heat-treating the additive manufactured object after the second step.

7. The manufacturing method according to claim 6, wherein, in the third step, the additive manufactured object is heat-treated at a temperature of not less than 200°C and not more than 650°C.

8. An additive manufactured object containing, to aluminum, not less than 0.20% by mass and not more than 13% by mass of at least one alloy element selected from iron, manganese, chromium, nickel and zirconium,

   wherein the iron content in the additive manufactured object is less than 4.5% by mass, and
   wherein the additive manufactured object has a relative density of not less than 95% and not more than 100%.

9. The additive manufactured object according to claim 8, wherein the total content of the iron, the manganese, the chromium, the nickel and the zirconium is not less than 0.20% by mass and not more than 13% by mass.

10. The additive manufactured object according to claim 8 or 9, further containing less than 1% by mass of silicon.

## FIG. 1A

## FIG. 1B

## FIG. 1C

## FIG. 2A

FIG. 2B

FIG. 2C

FIG. 3

FIG. 4

## FIG. 5A

## FIG. 5B

## FIG. 6A

Example 1-1

100 μm

## FIG. 6B

Example 2-1

100 μm

## FIG. 6C

Example 3-1

100 μm

## FIG. 6D

Example 4-1

100 μm

## FIG. 7A

Example 5-1

100 μm

## FIG. 7B

Example 6-1

100 μm

# FIG. 7C

Example 7-1

100 μ m

# FIG. 7D

Example 8-1

100 μ m

# FIG. 8A

Example 9-2

100 μm

# FIG. 8B

Example 10-2

100 μm

# FIG. 8C

Example 11-2

100 μm

# FIG. 8D

Example12-2

100 μm

## FIG. 9A

Comparative Example 1-1

## FIG. 9B

Comparative Example 2-1

# FIG. 9C

Comparative Example 3-1

crack

100 $\mu$ m

# FIG. 10A

Comparative Example 4-1

100 $\mu$ m

## FIG. 10B

Comparative Example 5-1

crack

100 μm

## FIG. 11A

Reference Example 9-1, Example 9-2

[Preheating 35°C]
Cracks were formed

[Preheating 200°C]
No cracks were formed

Outer
appearance
photograph

OM image
(vertical
cross section)

100 μm

100 μm

# FIG. 11B

Reference Example 10-1, Example 10-2

[Preheating 35°C]
Cracks were formed

[Preheating 200°C]
No cracks were formed

Outer
appearance
photograph

OM image
(vertical cross
section)

# FIG. 11C

Reference Example 11-1, Example 11-2

[Preheating 35°C]
Cracks were formed

[Preheating 200°C]
No cracks were formed

Outer appearance photograph

OM image (vertical cross section)

# FIG. 11D

Reference Example 12-1, Example 12-2

[Preheating 35°C]
Cracks were formed

[Preheating 200°C]
No cracks were formed

Outer
appearance
photograph

OM image
(vertical
cross section)

# FIG. 12A

Example 1-1

# FIG. 12B

Example 2-1

## FIG. 12C

Example 3-1

## FIG. 12D

Example 4-1

# FIG. 13A

Example 5-1

Legend: -▲-450°C  -✳-500°C  -⊞-550°C  -□-400°C  -○-350°C  -✕-300°C

Y-axis: Hv0.2 (50, 70, 90, 110, 130)
X-axis: Aging time (h) (0, 5, 10, 15, 20, 25, 30)

# FIG. 13B

Example 6-1

Legend: -○-350°C  -✕-300°C

Y-axis: Hv0.2 (50, 70, 90, 110, 130, 150)
X-axis: Aging time (h) (0, 5, 10, 15, 20, 25, 30)

## FIG. 13C

Example 7-1

## FIG. 13D

Example 8-1

## FIG. 14A

Example 9-2

## FIG. 14B

Example 10-2

## FIG. 14C

Example 11-2

Legend:
- -×- 500°C-T5
- -▲- 450°C-T5
- -□- 400°C-T5
- -◇- 350°C-T5
- -*- 300°C-T5

X-axis: Annealing time (h)
Y-axis: Hv0.2

## FIG. 14D

Example 12-2

Legend:
- -□- 400°C-T5
- -◇- 350°C-T5
- -*- 300°C-T5

X-axis: Annealing time (h)
Y-axis: Hv0.2

# FIG. 15A

Example 1-1

500 nm

# FIG. 15B

Example 2-1

500 nm

# FIG. 15C

Example 5-1

# FIG. 15D

Example 7-1

FIG. 15E

Example 8-1

FIG. 15F

Example 11-2

# FIG. 15G

Example 12-2

| INTERNATIONAL SEARCH REPORT | International application No. |
|---|---|
| | **PCT/JP2021/037590** |

**A. CLASSIFICATION OF SUBJECT MATTER**

*B22F 10/28*(2021.01)i; *B22F 1/00*(2022.01)i; *B22F 3/16*(2006.01)i; *B22F 3/24*(2006.01)i; *B22F 10/362*(2021.01)i;
*B22F 10/64*(2021.01)i; *B22F 12/13*(2021.01)i; *C22C 21/00*(2006.01)i
FI: B22F10/28; B22F1/00 N; B22F3/16; B22F3/24 C; B22F10/362; B22F10/64; B22F12/13; C22C21/00 L; C22C21/00 M; C22C21/00 N

According to International Patent Classification (IPC) or to both national classification and IPC

**B. FIELDS SEARCHED**

Minimum documentation searched (classification system followed by classification symbols)

B22F10/28; B22F1/00; B22F3/16; B22F3/24; B22F10/362; B22F10/64; B22F12/13; C22C21/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2019/155165 A1 (C-TEC CONSTELLIUM TECHNOLOGY CENTER) 15 August 2019 (2019-08-15) claims, specification, page 3, line 18 to page 8, line 26, examples | 1-10 |
| X | CN 111593234 A (CENTRAL SOUTH UNIVERSITY) 28 August 2020 (2020-08-28) claims, paragraphs [0004]-[0043], examples | 1-10 |
| X | CN 111659889 A (TONGJI UNIVERSITY) 15 September 2020 (2020-09-15) claims, paragraphs [0006]-[0043], examples | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 November 2021** | **30 November 2021** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

EP 4 227 029 A1

## INTERNATIONAL SEARCH REPORT
### Information on patent family members

International application No.

**PCT/JP2021/037590**

| Patent document cited in search report | | | Publication date (day/month/year) | Patent family member(s) | Publication date (day/month/year) |
|---|---|---|---|---|---|
| WO | 2019/155165 | A1 | 15 August 2019 | US 2021/0032727 A1 claims, paragraphs [0017]-[0060], examples<br>EP 3749471 A1<br>JP 2021-514423 A | |
| CN | 111593234 | A | 28 August 2020 | (Family: none) | |
| CN | 111659889 | A | 15 September 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017203717 A

- JP 2016053198 A

**Non-patent literature cited in the description**

- **TAKAHIRO KIMURA.** *Journal of Japan Laser Processing Society,* 2018, vol. 25 (3), 164-173